# EUROPEAN PATENT APPLICATION

(11) **EP 4 819 740 A1**
(43) Date of publication of application: **07.10.2026**
(21) Application number: 24911225.1
(22) Date of filing: 25.12.2024
(51) Int. Cl.: H04W 72/231

(54) **RELAY COMMUNICATION METHOD AND COMMUNICATION APPARATUS**

(30) Priority: 27.12.2023 CN 202311830249
(71) Applicant: Huawei Technologies Co., Ltd., Shenzhen, Guangdong 518129 (CN)
(72) Inventor: YAN, Mao, Shenzhen, Guangdong 518129 (CN); PENG, Zhongchong, Shenzhen, Guangdong 518129 (CN); LIU, Fengwei, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2024/142270
(87) International publication number: WO 2025/140301

(57) **Abstract**

This application provides a relay communication method and a communication apparatus, so that a signal can be transmitted by using forwarding resources of a plurality of beam sets of a relay device, thereby improving communication performance. The method includes: sending, by a network device, a plurality of pieces of forwarding resource configuration information to a relay device, wherein the plurality of pieces of forwarding resource configuration information correspond to a plurality of beam sets of the relay device, and each of the plurality of beam sets includes a plurality of beams; and sending, by the network device, first indication information to the relay device, wherein the first indication information is used to indicate forwarding a first signal based on a beam set corresponding to first forwarding resource configuration information in the plurality of pieces of forwarding resource configuration information; the first signal is from a terminal device or the network device; and forwarding, by the relay device, the first signal based on the beam set corresponding to the first forwarding resource configuration information.

## Description

### CROSS-REFERENCE TO RELATED APPLICATIONS

This application claims priority to Chinese Patent Application No. 202311830249.0, filed with the China National Intellectual Property Administration on December 27, 2023, and entitled "Relay Communication Method and Communication Apparatus", which is incorporated herein by reference in its entirety.

### TECHNICAL FIELD

This application relates to the field of communication technologies, and in particular, to a relay communication method and a communication apparatus.

### BACKGROUND

In a mobile communication system, it has been proposed to assist communication between a network device and a terminal device through a relay device, in order to improve network coverage and cell-edge throughput, among other things. Signals between the network device and the terminal device can be transmitted through forwarding by the relay device. How the network device controls the relay device to forward signals using forwarding resources to achieve the purpose of improving signal coverage has become an urgent problem to be solved currently.

### SUMMARY

This application provides a relay communication method and a communication apparatus, configured to configure forwarding resources for a plurality of beam sets on a relay device, and perform relay transmission of a signal by using the relay device, thereby improving signal coverage and communication performance.

According to a first aspect, an embodiment of this application provides a relay communication method, including: sending, by a network device, a plurality of pieces of forwarding resource configuration information to a relay device, where the plurality of pieces of forwarding resource configuration information correspond to a plurality of beam sets of the relay device, and each of the plurality of beam sets includes a plurality of beams; sending, by the network device, first indication information to the relay device, where the first indication information is used to indicate to forward a first signal based on a beam set corresponding to first forwarding resource configuration information in the plurality of pieces of forwarding resource configuration information; where the first signal is from a terminal device or the network device; and forwarding, by the relay device, the first signal based on the beam set corresponding to the first forwarding resource configuration information.

It may be understood that the function of the first indication information may also be alternatively described as the first indication information being used to activate the forwarding resource corresponding to the first forwarding resource configuration information specified in the plurality of forwarding resource configuration information. When forwarding the first signal, the relay device may specifically implement the following manner: When the first signal is from the terminal device, the first signal may also be understood as an uplink signal, and the relay device forwards the first signal from the terminal device to the network device based on the beam set corresponding to the first forwarding resource configuration information; or when the first signal is from the network device, the first signal may also be understood as a downlink signal, and the relay device forwards the first signal from the network device to the terminal device based on the beam set corresponding to the first forwarding resource configuration information.

In the foregoing design, one beam set of the relay device may correspond to one panel, and the network device configures forwarding resources corresponding to a plurality of beam sets, thereby implementing relay transmission based on a plurality of panels, which can improve signal coverage and communication performance.

The following provides a detailed description of a specific correspondence between the forwarding resource configuration information and the beam sets.

In a possible design, the plurality of forwarding resource configuration information items are in a one-to-one correspondence with the plurality of beam sets of the relay device, and each piece of forwarding resource configuration information in the plurality of forwarding resource configuration information items includes an identifier of a beam set and an identifier of a forwarding resource.

The time domain resources and/or frequency domain resources corresponding to the plurality of pieces of forwarding resource configuration information are different, or may alternatively be described as that the time domain resources and/or frequency domain resources corresponding to the forwarding resources corresponding to different beam sets are different. For example, when the time domain resources corresponding to the plurality of pieces of forwarding resource configuration information are the same but the frequency domain resources are different, the relay device may simultaneously use the plurality of beam sets to forward a signal on different frequency domain resources. For example, when the time domain resources corresponding to the plurality of pieces of forwarding resource configuration information are different but the frequency domain resources are the same, the relay device may use the plurality of beam sets to forward a signal on a same frequency domain resource in a time division manner. For another example, when the time domain resources and the frequency domain resources corresponding to the plurality of pieces of forwarding resource configuration information are different, the relay device may use the plurality of beam sets to forward a signal in a time division and frequency division manner.

In this design, a correspondence between a beam set and a forwarding resource is established, which facilitates subsequent fast activation of a forwarding resource corresponding to a specified beam set, so that the forwarding resource can be used for relay transmission. Based on such a correspondence, when activating the forwarding resource in the first forwarding resource configuration information by using the first indication information, the first indication information needs to include only an identifier of one forwarding resource in the first forwarding resource configuration information or an identifier of one beam set in the first forwarding resource configuration information.

In another possible design, each piece of the plurality of forwarding resource configuration information includes an identifier of one forwarding resource set, the one forwarding resource set corresponds to at least one beam set of the relay device, and a plurality of forwarding resources in the one forwarding resource set are in a one-to-one correspondence with a plurality of beams included in each of the at least one beam set.

The plurality of pieces of forwarding resource configuration information correspond to different time domain resources and/or frequency domain resources, or may alternatively be described as that the forwarding resource sets corresponding to different beam sets correspond to different time domain resources and/or frequency domain resources.

For example, where a plurality of resource configuration information for forwarding resources is in a one-to-one correspondence with a plurality of beam sets, and one set of forwarding resources corresponds to one beam set, it can be understood that when the time domain resources corresponding to the plurality of forwarding resource sets are the same but the frequency domain resources are different, the relay device may simultaneously use the plurality of beam sets to forward signals on different frequency domain resources. For instance, when the time domain resources corresponding to the plurality of forwarding resource sets are different but the frequency domain resources are the same, the relay device may use the plurality of beam sets to forward signals on the same frequency domain resource in a time-division manner. Alternatively, when the time domain resources corresponding to the plurality of forwarding resource sets are different and the frequency domain resources are also different, the relay device may use the plurality of beam sets to forward signals in a time-division and frequency-division manner.

For example, where one piece of resource configuration information for forwarding resources corresponds to a plurality of beam sets, that is, one set of forwarding resources corresponds to a plurality of beam sets, the frequency domain resource corresponding to the forwarding resource set may be divided into a plurality of frequency domain ranges, and different beam sets in the plurality of beam sets corresponding to the forwarding resource set correspond to different frequency domain ranges. Optionally, these multiple frequency domain ranges may be obtained through subband division. Such a design enables the relay device to simultaneously use the plurality of beam sets to forward signals on different frequency domain resources, thereby improving signal coverage and communication performance while saving relay transmission time.

When activating the forwarding resource information in the first forwarding resource configuration information through the first indication information, the first indication information includes an identifier of one forwarding resource set in the first forwarding resource configuration information and an identifier of at least one beam set, wherein the first forwarding resource configuration information corresponds to the at least one beam set. In this design, multiple forwarding resource sets are configured, and the correspondence between the beam set and the forwarding resource set is bound during the activation process, thereby being used for relay transmission.

Additionally, optionally, the scenario in the above design where different configuration information for forwarding resources corresponds to different frequency domains may be specifically manifested as: different configuration information for forwarding resources correspond to different subbands. In this case, each piece of configuration information for forwarding resources among the plurality of pieces of configuration information for forwarding resources includes an identifier of one subband.

In a possible design, the network device receives beam configuration information from a third-party network element; and/or, the relay device receives beam configuration information from a third-party network element, wherein the beam configuration information is used to configure one or more of the following: an identifier of each beam set included in the relay device; an identifier of each beam included in each beam set; and an identifier of quasi co-location information corresponding to each beam. This design enables the network device and the relay device to have a unified understanding of the beam set allocation on the relay device, facilitating the smooth subsequent relay transmission.

In a possible design, the network device may further determine, based on forwarding resource types corresponding to the plurality of pieces of forwarding resource configuration information, forwarding priorities corresponding to the plurality of pieces of forwarding resource configuration information. This design may be applied to a case in which time domain resources corresponding to the plurality of pieces of forwarding resource configuration information overlap, so that a beam set corresponding to which piece of forwarding resource configuration information is used for relay transmission can be quickly determined on an overlapping part (for example, a conflicting timeslot).

According to a second aspect, an embodiment of this application provides a relay communication method, applied to a relay device, including: receiving a plurality of pieces of forwarding resource configuration information from a network device, where the plurality of pieces of forwarding resource configuration information correspond to a plurality of beam sets of the relay device, and each of the plurality of beam sets includes a plurality of beams; receiving first indication information from the network device, where the first indication information is used to indicate to forward a first signal based on a beam set corresponding to first forwarding resource configuration information in the plurality of pieces of forwarding resource configuration information; and the first signal is from a terminal device or the network device; forwarding the first signal based on the beam set corresponding to the first forwarding resource configuration information by using the communication module.

Some possible designs may be understood with reference to the descriptions in the first aspect, and details are not described in this embodiment of this application.

According to a third aspect, an embodiment of this application provides a relay communication method, applied to a network device, including: sending, by the network device, to a relay device a plurality of pieces of forwarding resource configuration information, where the plurality of pieces of forwarding resource configuration information correspond to a plurality of beam sets of the relay device, and each of the plurality of beam sets includes a plurality of beams; and sending, by the network device, first indication information to the relay device by using the communication module, where the first indication information is used to indicate to forward a first signal based on a beam set corresponding to first forwarding resource configuration information in the plurality of pieces of forwarding resource configuration information; and the first signal is from a terminal device or the network device.

Some possible designs may be understood with reference to the descriptions in the first aspect, and details are not described in this embodiment of this application.

According to a fourth aspect, an embodiment of this application provides a communication apparatus. The communication apparatus may be a relay device, or may be an apparatus, a module, a chip, or the like in a relay device, or may be an apparatus that can be used in a matching manner with a relay device. In a design, the communication apparatus may include modules that one-to-one correspond to the method/operation/step/action described in the second aspect. The module may be a hardware circuit, or may be software, or may be implemented by a hardware circuit in combination with software. In a design, the communication apparatus may include a processing module and a communication module. Optionally, the communication module includes a sending unit and a receiving unit. Alternatively, the communication module may be described as a transceiver unit, a communications interface, a communications unit, or the like, and the processing module may be described as a processing unit.

A communication module, configured to receive a plurality of pieces of forwarding resource configuration information from a network device, where the plurality of pieces of forwarding resource configuration information correspond to a plurality of beam sets of the relay device, and each of the plurality of beam sets includes a plurality of beams;
the communication module is further configured to receive first indication information from the network device, where the first indication information is used to indicate to forward a first signal based on a beam set corresponding to first forwarding resource configuration information in the plurality of pieces of forwarding resource configuration information, and the first signal is from a terminal device or the network device;
a processing module, configured to forward the first signal through the communication module based on the beam set corresponding to the first forwarding resource configuration information.

It may be understood that when the processing module forwards information through the communication module, the processing module may specifically indicate the communication module to forward or send the information. In a possible design, the communication apparatus according to the fourth aspect may alternatively include only the communication module, and not include the processing module.

In a possible design, the communication module is further configured to: receive beam configuration information from a third-party network element; where the beam configuration information is used to configure one or more of the following: an identifier of each beam set included in the relay device; an identifier of each beam included in each beam set; and an identifier of quasi co-location information corresponding to each beam.

In a possible design, the processing module is further configured to determine, based on the forwarding resource types corresponding to the plurality of forwarding resource configuration information, the forwarding priorities corresponding to the plurality of forwarding resource configuration information.

Other possible designs can be understood with reference to the descriptions in the first aspect, and details are not described herein again in this embodiment of this application.

According to a fifth aspect, an embodiment of this application provides a communication apparatus. The communication apparatus may be a network device, or may be an apparatus, a module, a chip, or the like in a network device, or may be an apparatus that can be used in conjunction with a network device. In a design, the communication apparatus may include modules that respectively correspond to the method/operation/step/action described in the third aspect, where the module may be a hardware circuit, or may be software, or may be implemented by a combination of a hardware circuit and software. In a design, the communication apparatus may include a processing module and a communication module. Optionally, the communication module includes a sending unit and a receiving unit. Alternatively, the communication module may be alternatively described as a transceiver unit, a communication interface, or a communication unit, and the processing module may also be alternatively described as a processing unit.
a processing module, configured to send a plurality of forwarding resource configuration information to a relay device through a communication module, wherein the plurality of forwarding resource configuration information corresponds to a plurality of beam sets of the relay device, and each of the plurality of beam sets includes a plurality of beams;
the processing module is further configured to send first indication information to the relay device through the communication module, wherein the first indication information is used to indicate forwarding a first signal based on a beam set corresponding to first forwarding resource configuration information in the plurality of forwarding resource configuration information; and the first signal is from a terminal device or the network device.

It may be understood that when the processing module sends information through the communication module, it specifically may indicate the communication module to send or forward the information. In a possible design, the communication apparatus described in the fifth aspect may alternatively include only the communication module and not include the processing module. In a possible design, the communication module is further configured to: receive beam configuration information from a third-party network element; wherein the beam configuration information is used to configure one or more of the following: an identifier of each beam set included in the relay device; an identifier of each beam included in each beam set; an identifier of quasi co-location information corresponding to each beam.

In a possible design, the processing module is further configured to determine, based on forwarding resource types corresponding to the plurality of pieces of forwarding resource configuration information, forwarding priorities corresponding to the plurality of pieces of forwarding resource configuration information.

For understanding of some other possible designs, refer to the descriptions in the first aspect. Details are not described in this embodiment of this application.

According to a sixth aspect, an embodiment of this application provides a communication apparatus, where the communication apparatus includes a processor, configured to implement the method described in the second aspect. The processor is coupled to a memory, the memory is configured to store an instruction and data, and when executing the instruction stored in the memory, the processor may implement the method described in the second aspect. Optionally, the communication apparatus may further include a memory. The communication apparatus may further include a communications interface, where the communications interface is configured to enable the communication apparatus to communicate with another device. For example, the communications interface may be a transceiver, a circuit, a bus, a module, a pin, or another type of communications interface.

According to a seventh aspect, an embodiment of this application provides a communication apparatus, where the communication apparatus includes a processor, configured to implement the method described in the third aspect. The processor is coupled to a memory, the memory is configured to store instructions and data, and when executing the instructions stored in the memory, the processor can implement the method described in the third aspect. Optionally, the communication apparatus may further include a memory. The communication apparatus may further include a communications interface, where the communications interface is configured to enable the communication apparatus to communicate with another device. For example, the communications interface may be a transceiver, a circuit, a bus, a module, a pin, or a communication interface of another type.

According to an eighth aspect, an embodiment of this application provides a communications system, including the communication apparatus described in the fourth aspect or the sixth aspect, and the communication apparatus described in the fifth aspect or the seventh aspect.

According to a ninth aspect, an embodiment of this application further provides a computer program. When the computer program is run on a computer, the computer is enabled to perform the method provided in any one of the first aspect to the third aspect.

According to a tenth aspect, an embodiment of this application further provides a computer program product, including a computer program or an instruction, where when the computer program or the instruction is run on a computer, the computer is enabled to perform the method provided in any one of the first aspect to the third aspect.

According to an eleventh aspect, an embodiment of this application further provides a computer-readable storage medium, where the computer-readable storage medium stores a computer program or an instruction, and when the computer program or the instruction is run on a computer, the computer is enabled to perform the method provided in any one of the first aspect to the third aspect.

According to a twelfth aspect, an embodiment of this application further provides a chip, where the chip is configured to read a computer program stored in a memory, and perform the method provided in any one of the first aspect to the third aspect. Alternatively, the chip includes a circuit configured to perform the method provided in any one of the first aspect to the third aspect.

According to a thirteenth aspect, an embodiment of this application further provides a chip system, where the chip system includes a processor, configured to support an apparatus in implementing the method provided in any one of the first aspect to the third aspect. In a possible design, the chip system further includes a memory, where the memory is configured to store necessary programs and data of the apparatus. The chip system may include a chip, or may include the chip and another discrete component.

For effects of the solutions provided in any one of the second aspect to the thirteenth aspect, refer to the corresponding descriptions in the first aspect.

### BRIEF DESCRIPTION OF DRAWINGS

FIG. 1 is a schematic architectural diagram of a communications system according to an embodiment of this application;
FIG. 2 is a schematic diagram of a structure of a multi-panel on a relay device according to an embodiment of this application;
FIG. 3 is a schematic flowchart of a relay communication method according to an embodiment of this application;
FIG. 4A is a schematic diagram of resource allocation according to an embodiment of this application;
FIG. 4B is a schematic diagram of resource allocation according to an embodiment of this application;
FIG. 4C is a schematic diagram of resource allocation according to an embodiment of this application;
FIG. 5A is a schematic diagram of beam distribution of a plurality of panels according to an embodiment of this application;
FIG. 5B is a schematic diagram of beam distribution of a plurality of panels according to an embodiment of this application;
FIG. 6A is a schematic structural diagram of a MAC-CE according to an embodiment of this application;
FIG. 6B is a schematic structural diagram of a MAC-CE according to an embodiment of this application;
FIG. 6C is a schematic structural diagram of a MAC-CE according to an embodiment of this application;
FIG. 7 is a schematic diagram of a time domain resource conflict according to an embodiment of this application;
FIG. 8 is a schematic structural diagram of a communication apparatus according to an embodiment of this application;
FIG. 9 is a schematic structural diagram of a communication apparatus according to an embodiment of this application;
FIG. 10 is a schematic structural diagram of a communication apparatus according to an embodiment of this application;
FIG. 11 is a schematic structural diagram of a communication apparatus according to an embodiment of this application.

### DESCRIPTION OF EMBODIMENTS

To make the objectives, technical solutions, and advantages of embodiments of this application clearer, the following further describes the embodiments of this application in detail with reference to the accompanying drawings.

The term "at least one" (item) mentioned in the embodiments of this application indicates one or more (items). "A plurality of" (items) means two or more (items). The term "and/or" describes an association relationship between associated objects, and indicates that three relationships may exist. For example, A and/or B may indicate the following three cases: only A exists, both A and B exist, and only B exists. The character "/" generally indicates an "or" relationship between associated objects. In addition, it should be understood that although terms such as "first" and "second" may be used in the embodiments of this application to describe the objects, these objects should not be limited to these terms. These terms are merely used to distinguish between the objects.

The terms "include" and "have" and any other variants thereof mentioned in the embodiments of this application are intended to cover a non-exclusive inclusion. For example, a process, method, system, product, or device that includes a series of steps or units is not limited to the listed steps or units, but may optionally include other steps or units that are not expressly listed, or optionally include other inherent steps or units of these processes, methods, products, or devices. It should be noted that in the embodiments of this application, the terms such as "example" or "for example" are used to indicate an illustration, an example, or a description. Any method or design described as "an example" or "for example" in the embodiments of this application should not be construed as being more preferred or having more advantages than another method or design. To be precise, the use of the terms such as "example" or "for example" is intended to present a related concept in a specific manner.

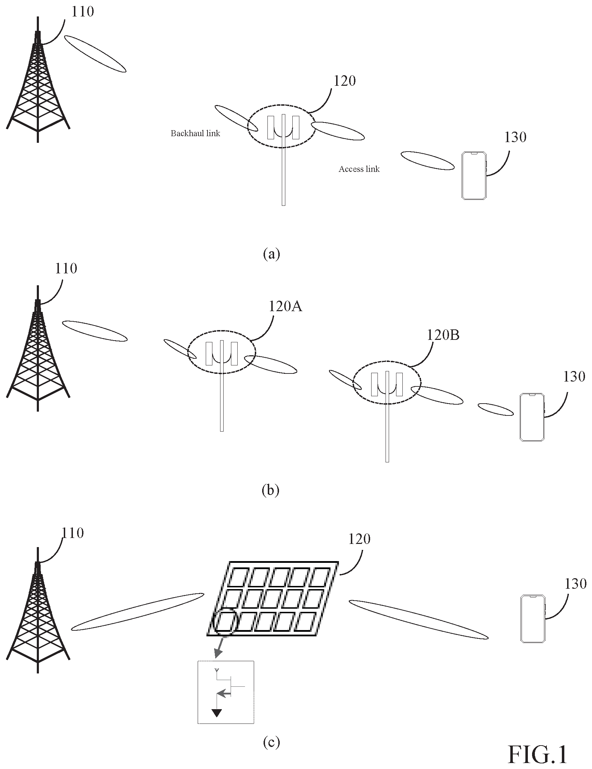

FIG. 1 is a schematic diagram of an architecture of a communications system applicable to the method provided in the embodiments of this application. The communications system includes at least one network device and at least one terminal device, and the communications system further includes at least one relay device, where the relay device may assist in communication between the network device and the terminal device. The relay device may include a plurality of antennas (or antenna panels), where some antennas are backhaul link side antennas configured to communicate with the network device through a backhaul link, and the other antennas are access link side antennas configured to communicate with the terminal device through an access link. The relay device may perform downlink forwarding. The network device sends a downlink signal through a backhaul link, and the relay device forwards, on an access link, a received signal received by the relay device on the backhaul link to the terminal device. Correspondingly, the terminal device receives, on the access link, the downlink signal forwarded by the relay device. The relay device may also perform uplink forwarding. The terminal device sends an uplink signal through an access link, and the relay device forwards, on a backhaul link, a received signal received by the relay device on the access link to the network device.

Figures (a), (b), and (c) in Figure 1 respectively illustrate three different architectures. Figure (a) in Figure 1 shows an architecture for single-hop transmission, Figure (b) in Figure 1 shows an architecture for multi-hop transmission, and Figure (c) in Figure 1 shows an architecture for reflective transmission.

Figure (a) in Figure 1 illustrates a network device 110, a relay device 120, and a terminal device 130. The network device 110 may provide network coverage for a specific geographic area. As previously mentioned, when the network device 110 is far away from the terminal device 130, the communication quality deteriorates. Therefore, the relay device 120 is introduced to assist communication between the network device 110 and the terminal device 130. As shown in Figure 1, the backhaul link side beam of the relay device may receive a signal from the network device and transmit it to the terminal device 130 via the access link side beam. Similarly, the network device 110 may send a downlink signal to the terminal device 130 through the relay device 120; the terminal device 130 may also send an uplink signal to the network device 110 through the relay device 120.

(b) in FIG. 1 shows a network device 110, relay devices 120A, 120B, and a terminal device 130. Different from (a) in FIG. 1, (b) in FIG. 1 shows a plurality of relay devices (for example, the relay devices 120A and 120B in the figure), that is, a downlink signal from the network device 110 may reach the terminal device 130 through forwarding by the plurality of relay devices, and an uplink signal from the terminal device 130 may also reach the network device 110 through forwarding by the plurality of relay devices. It should be understood that a processing process of the received signals by the relay devices 120A and 120B in (b) in FIG. 1 is similar to the processing process of the relay device 120 in (a) in FIG. 1, and details are not described again.

(c) in FIG. 1 shows a network device 110, a relay device 120, and a terminal device 130. Different from (a) and (b) in FIG. 1, the relay device 120 uses a reflective antenna panel to forward a signal in a reflection manner.

In the embodiments of this application, the relay device may be used in a communication network where multi-hop relay cascading is implemented. That is, the relay node may establish a connection with a network device through at least one upper-level relay node and be controlled by the network device. In this case, the upper-level relay node may be considered as a special type of network device; or the relay node may establish a connection with a terminal device through at least one lower-level relay node. In this case, the lower-level relay node may be considered as a special type of terminal device. The relay device provided in the embodiments of this application has a signal forwarding function. In one form of the relay device, the signal forwarding of the relay device may involve amplifying the signal before forwarding it. Additionally, the relay device may perform carrier frequency shifting on the signal, or may demodulate the signal, re-modulate it, and then forward it, or may perform noise reduction on the signal before forwarding it. This form of relay device may be referred to as an amplify-and-forward relay device or a network controlled repeater (network controlled repeater, NCR). The NCR mainly consists of two parts: a mobile terminal (mobile termination, MT) unit (which may also be referred to as a controller unit) and a forwarding (forwarding, Fwd) unit. The relay device uses the MT unit to interact with the base station for message exchange. For example, beam control, gain (or output power) control, uplink or downlink signal forwarding direction control, and on/off control are all interactions between the MT unit and the base station. The Fwd unit is the unit responsible for forwarding the relay device, which does not need to demodulate the received signal but directly amplifies and forwards it.

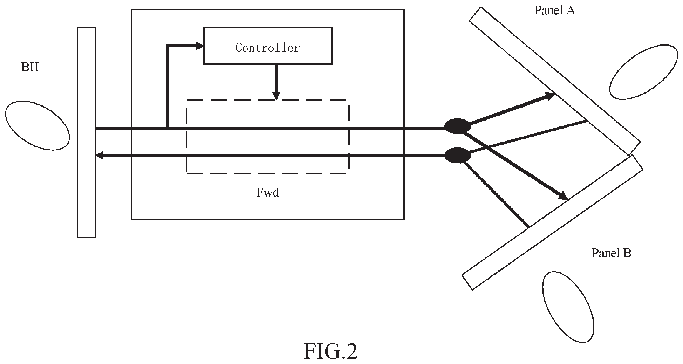

To improve the coverage and transmission capability of a relay device, the relay device uses a multi-panel technology on an access side, as shown in FIG. 2. The relay device has two panels on the access side, and can generate beams in a maximum of two directions at the same time to receive signals from a terminal device or amplify and forward signals to the terminal device.

In another form of the relay device, the relay device may use a special reflective antenna or a transmissive antenna to directly reflect or transmit a signal. The relay device in this form may be referred to as a reflector, or a reflective surface, or other names, such as an intelligent reflecting surface (intelligent reflecting surface), a reconfigurable reflecting surface (reconfigurable reflecting surface, RIS), a reflective array, an intelligent reflecting array (intelligent reflecting array), a reflector, an intelligent reflector, a backscatter device, a passive device (passive device), a semi-passive device (semi-passive device), an ambient signal device (ambient signal device), or the like. The relay device may also be considered as a terminal device in a special form. Alternatively, if the relay device is classified based on a network side's control capability over the relay device, the relay device may be classified into a non-smart relay device and a smart relay device; or an uncontrolled repeater (uncontrolled repeater) and a network controlled repeater (network controlled repeater, NetConRepeater). The network device may control the smart relay device to perform more functions for enhancing performance, such as relay transmit power control, relay amplification gain control, relay beam sweeping control, and relay precoding control.

The network device provided in this embodiment of this application may be a wireless network device, and the wireless network device may be a base station (base station, BS), an evolved NodeB (evolved NodeB, eNodeB), or a transmit/receive point (transmit/receive Point). TRP), a next generation NodeB (gNB) in a fifth generation (5th generation, 5G) mobile communication system, a sixth generation (6th generation, 6G) a next generation base station in a mobile communication system, a base station in a future mobile communication system, an access node in a WiFi system, or the like; The network device provided in this embodiment of this application may alternatively be a module or a unit that implements some functions of the base station. For example, the network device may be a centralized unit (central unit, CU), or may be a distributed unit (distributed unit, DU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium/media access control, MAC) layer of the base station, and may further complete some or all physical layer functions. In other deployments, the network device may also be an antenna unit (radio unit, RU) or the like. In still some deployments, the access network may use an open radio access network (open radio access network, ORAN) architecture or the like, and the network device may be a node in the ORAN architecture. A specific type of the network device is not limited in this application. For example, when the access network uses the ORAN architecture, the network device shown in this embodiment of this application may be a network device in the ORAN, a module in the network device, or the like. In the ORAN system, the CU may also be referred to as an open (open, O)-CU. Similarly, the DU may also be referred to as an O-DU, the CU-DU may also be referred to as an O-CU-DU, and the CU-UP may also be referred to as an O-CU-UP. The RU may also be referred to as an O-RU. Any one of the CU (or the CU-CP, the CU-UP), the DU, and the RU in this application may be implemented by using a software module, a hardware module, or a combination of a software module and a hardware module.

For specific descriptions of the above-mentioned protocol layers, reference may be made to the relevant technical specifications of the 3rd Generation Partnership Project (3GPP). The wireless network device may be a macro base station, or may be a micro base station, an indoor station, or the like. The embodiments of this application do not limit the specific technologies or the specific device forms used by the network device.

The terminal device provided in the embodiments of this application may be a device having a wireless transceiver function, which may send a signal to a base station or receive a signal from the base station. The terminal device may also be referred to as a terminal, user equipment (user equipment, UE), a mobile station, a mobile terminal, or the like. The terminal may be widely used in various scenarios, for example, device-to-device (device-to-device, D2D) communication, vehicle to everything (vehicle to everything, V2X) communication, machine type communication (machine-type communications, MTC), the Internet of things (internet of things, IOT), virtual reality, augmented reality, industrial control, self-driving, telemedicine, smart grid, smart home, smart office, smart wearable, smart transportation, smart city, and the like. The terminal may be a mobile phone, a tablet computer, a computer with a wireless transceiver function, a wearable device, a vehicle, an airplane, a ship, a robot, an industrial robot arm, a smart home device, or the like. The embodiments of this application do not limit the specific technologies or the specific device forms used by the terminal.

In the embodiments of this application, the functions of the network device may also be performed by a module (such as a chip) in the network device, or may be performed by a control subsystem that includes the functions of the network device. The control subsystem that includes the functions of the network device herein may be a control center in the foregoing application scenarios such as smart grid, industrial control, intelligent transportation, or smart city. The functions of the terminal device may also be performed by a module (such as a chip or a modem) in the terminal device, or may be performed by an apparatus that includes the functions of the terminal device. The functions of the relay device may also be performed by a module (such as a chip or a modem) in the relay device, or may be performed by an apparatus that includes the functions of the relay device.

It should be understood that "sending information to a communications device (for example, the communications device may be a network device, a relay device, or a terminal device)" in this application may be understood as that a destination end of the information is the communications device, and may include directly or indirectly sending the information to the communications device. "Receiving information from a communications device" may be understood as that a source end of the information is the communications device, and may include directly or indirectly receiving the information from the communications device. The information may undergo necessary processing, such as format change, between the source end and the destination end of the information, but the destination end may understand the information as valid information from the source end. Similar expressions in this application may be understood in a similar manner, and details are not described herein again.

It should be understood that the quantity and types of devices in the communication system shown in FIG. 1 are merely for illustration purposes, and the embodiments of this application are not limited thereto. In actual applications, the communication system may further include more terminal devices, more relay devices, more network devices, and may also include other network elements, for example, may include a core network device, and/or a network management device such as an operation administration and maintenance (operation administration and maintenance, OAM) device.

The following provides some examples to illustrate the technical terms involved in this application.

### 1. Resources:

In the embodiments of this application, the forwarding resource of the relay device is involved. The relay device primarily performs the following operations based on the forwarding resource: forwarding a signal from a network device to a terminal device, or forwarding a signal from a terminal device to a network device. The forwarding resource is generally configured in a reference signal resource set, and one forwarding resource set may include one or more forwarding resources. To distinguish between different forwarding resources, each forwarding resource may correspond to an index (index) or an identifier (identity, ID) of the forwarding resource. To distinguish between different forwarding resource sets, each forwarding resource set may also correspond to an index or an identifier of the forwarding resource set.

The relay resource may be used to configure relay communication attributes, for example, defining at least one of the following parameters corresponding to a signal forwarded by the relay device: a time resource, a frequency domain resource, an access link beam, a backhaul link beam, an amplification gain, or a reflection configuration matrix (for a reflector). It should be understood that sending a signal based on the relay resource may also be referred to as sending a relay resource. In this technical field, the two may be used interchangeably.

In beam measurement, there is a correspondence between a beam and a resource. Therefore, measuring quality of the resource by the terminal device is equivalent to measuring quality of the beam. In a scenario in which the relay device forwards a signal from the terminal device to the network device, the relay resource may be an uplink signal resource. In a scenario in which the relay device forwards a signal from the network device to the terminal device, the relay resource may also be a downlink signal resource. The uplink signal includes but is not limited to a sounding reference signal (sounding reference signal, SRS) and a demodulation reference signal (demodulation reference signal, DMRS). The downlink signal includes but is not limited to a channel state information reference signal (channel state information reference signal, CSI-RS), a phase tracking reference signal (phase tracking reference signal, PTRS), a cell-specific reference signal (cell specific reference signal, CS-RS), a UE-specific reference signal (user equipment specific reference signal, US-RS), a demodulation reference signal (demodulation reference signal, DMRS), and a synchronization signal/physical broadcast channel block (synchronisation signal /physical broadcast channel block, SS/PBCH block). The SS/PBCH block may be referred to as a synchronization signal block (synchronisation signal block, SSB) for short. Reference signals are generally used for channel estimation, assisting signal demodulation, detection, and the like. For example, the DMRS and the CSI-RS may be used to obtain channel information, and the PTRS may be used to obtain phase change information.

The types of the transmission resources may be classified based on time domain characteristics of the transmission resources. The types of the transmission resources include periodic, aperiodic, and semi-persistent. A periodic resource is configured with a period and an offset, and the periodic resource takes effect periodically. A transmit end may periodically send a reference signal based on the periodic resource, where the reference signal may be referred to as a periodic reference signal (periodic reference signal, P-RS). Before being used each time, an aperiodic resource needs to be activated by using signaling, and the aperiodic resource takes effect only once after being activated. When the aperiodic resource is activated, the transmit end may send a reference signal through the aperiodic resource, where the reference signal may be referred to as an aperiodic reference signal (aperiodic reference signal, AP-RS). A semi-persistent resource is also configured with a period and an offset, but the semi-persistent resource takes effect periodically only when the semi-persistent resource is in an activated state, and does not take effect when the semi-persistent resource is in an inactive state. After the semi-persistent resource is activated, the transmit end may periodically send a reference signal through the semi-persistent resource, and stop sending the reference signal after the semi-persistent resource is deactivated. The reference signal may be referred to as a semi-persistent reference signal (semi-persistent reference signal, SP-RS).

2. Panel: A panel refers to an antenna panel, which may be an antenna panel of a network device or an antenna panel of a terminal device. An antenna panel generally has one or more antennas, which are arranged into an antenna array to perform beamforming, thereby forming analog beams. This antenna array can generate analog beams directed towards different directions. In other words, multiple analog beams can be formed on each antenna panel, and beam measurement may be performed to determine which analog beam is the best for the antenna panel to use. A terminal device may be equipped with multiple antenna panels, which may be distributed at different locations and face different directions, thereby ensuring that no matter which direction the terminal device faces, there is at least one antenna panel facing the network device, allowing for data transmission with the network device. The terminal device may enable all antenna panels simultaneously for transmission. Alternatively, to reduce power consumption of the terminal device, the terminal device may use only a single antenna panel for transmission at a time, while other unused antenna panels may be turned off. The network device generally needs to be notified whether an antenna panel of the terminal device is in an open or closed state; that is, the terminal device and the network device generally need to exchange the status information of the antenna panels.

In the embodiments of this application, the antenna panel refers to an antenna panel of a relay device. In the protocol, the antenna panel may be represented by using a panel, a panel index, a panel ID, or the like. In addition, the antenna panel may also be implicitly represented in another manner. For example, the antenna panel may also be characterized by an antenna port (such as a CSI-RS port, an SRS port, a DMRS port, a PTRS port, a common reference signal (common reference signal, CRS) port, a tracking reference signal (tracking reference signal, TRS) port, an SSB port, or the like) or an antenna port group; or may also be characterized by a resource (such as a CSI-RS resource, an SRS resource, a DMRS resource, a PTRS resource, a CRS resource, a TRS resource, an SSB resource, or the like) or a resource group; or may also be characterized by a channel, where the channel may be a physical uplink control channel (physical uplink control channel, PUCCH), a physical uplink shared channel (physical uplink shared channel, PUSCH), a physical random access channel (physical random access channel, PRACH), a physical downlink shared channel (physical downlink shared channel, PDSCH), a physical downlink control channel (physical downlink control channel, PDCCH), a physical broadcast channel (physical broadcast channel, PBCH), or the like; or may also be characterized by a beam, a quasi co-location (quasi co-location, QCL), a transmission configuration indicator (transmission configuration indicator, TCI) -state (state), a spatial relation, or an index configured in the QCL, TCI-state, or spatial relation; or may also be characterized by a beam group, a QCL group, a TCI-state group, a spatial relation group, or the like; or may also be characterized by a relay capability parameter set reported by the relay device.

There is a correspondence between a relay capability parameter set and a panel. One relay capability parameter set includes relay capabilities corresponding to one panel, for example, the relay capability parameter set includes a maximum number of transmission layers, a maximum number of SRS ports, a maximum transmit power, and the like corresponding to one panel. In other words, the antenna panel/panel described in this application may be replaced with the foregoing content.

### 2. Beam (beam):

A beam is a communication resource. The beam may be a wide beam, a narrow beam, or another type of beam. A technology for forming a beam may be a beamforming technology or another technical means. The beamforming technology may be specifically a digital beamforming technology, an analog beamforming technology, or a hybrid digital/analog beamforming technology. Different beams may be used to send the same information or different information. Optionally, a plurality of beams having the same or similar communication characteristics may be considered as one beam. One beam may include one or more antenna ports, which are used to transmit a data channel, a control channel, a sounding signal, and the like.

The beam may be embodied in the new radio (NR) protocol as a spatial domain filter (spatial filter), or referred to as a spatial domain parameter (spatial parameter), a spatial parameter (spatial parameter), a spatial domain setting (spatial domain setting), a spatial setting (spatial setting), or quasi co-location (QCL) information, a QCL assumption, a QCL indication, or the like. The beam may be indicated by a transmission configuration indication state (TCI-state) parameter or by a spatial relation (spatial relation) parameter. Therefore, in the embodiments of this application, the beam may be replaced with a spatial domain filter, a spatial filter, a spatial domain parameter, a spatial parameter, a spatial domain setting, a spatial setting, QCL information, a QCL assumption, a QCL indication, a TCI-state (DL TCI-state, UL TCI-state), a spatial relation, or the like. These terms are also equivalent to each other. The beam may alternatively be replaced with another term that represents a beam, which is not limited in this application.

A beam may also be understood as a spatial resource, and may refer to a transmit or receive precoding vector that has an energy transmission directivity. The energy transmission directivity may refer to a situation where, within a certain spatial location, a signal received after being precoded by the precoding vector has a relatively good received power, for example, meeting a received demodulation signal-to-noise ratio (SNR), or the energy transmission directivity may also refer to a situation where the same signal received from different spatial locations through the precoding vector has different received powers. The same device (for example, a network device or a terminal device) may have different precoding vectors, and different devices may also have different precoding vectors, that is, correspond to different beams. Depending on the configuration or capability of the device, a device may use one or more of the different precoding vectors at the same time, that is, may simultaneously form one or more beams.

From the perspectives of transmission and reception, beams may be classified into a transmission beam (Tx beam) and a reception beam (Rx beam). A transmission beam may refer to a distribution of signal strength formed in different directions in space after a signal is transmitted through an antenna. A reception beam may refer to a distribution of signal strength in different directions in space of a radio signal received from an antenna. The reception beam of a signal will be directed as much as possible toward the transmission beam of the signal to improve the received signal-to-noise ratio and avoid interference between different signals.

In the embodiments of this application, the relay device may form one or more beams or one or more beam sets (the beam set may also be referred to as a beam group). It should be understood that one beam set includes at least one beam. Optionally, in a scenario in which a plurality of panels are distributed on the relay device, one beam set corresponds to one panel. In this embodiment of this application, an identifier of the beam set may alternatively be described as an identifier (for example, a panel ID) of the panel.

In a possible design, identifiers of different beam sets and identifiers of beams in each beam set are defined for the plurality of beam sets. For example, beam set A ({a0, a1, a2,...}), beam set B ({b0, b1, b2,...}), and beam set C ({c0, c1, c2,...}) are defined, where a0, a1, a2, b0, b1, b2, c0, c1, and c2 are identifiers (or referred to as indexes) of beams.

In another possible design, all beams of the relay device may be uniformly numbered. For example, the network device and the relay device directly identify different access-side beams by using a beam-index. For example, it is assumed that a maximum quantity of beams corresponding to the beam set A is M, and identifiers of beams in the beam set A are Beam-Index 0 to Beam-Index M-1; a maximum quantity of beams corresponding to the beam set B is N, and identifiers of beams in the beam set B are Beam-Index M to Beam-Index M+N-1.

Optionally, a quantity of beam sets or beams on the relay access side or backhaul side may be any value in {1, 2, 4, 6, 8, 10, 16, 24, 32}. It is assumed that a quantity of beam sets or a quantity of beams in the beam set is not greater than K, where K may be any value in {1, 2, 4, 6, 8, 10, 16, 24, 32}.

### 4. Quasi Co-location (quasi co-location, QCL):

QCL is used to indicate that multiple transmission resources share one or more identical or similar communication characteristics. For multiple transmission resources with a QCL relationship, the same or similar communication configurations may be applied. For example, signals corresponding to antenna ports with a QCL relationship have the same parameters; or, the parameters (which may also be referred to as QCL parameters) of one antenna port may be used to determine the parameters of another antenna port that has a QCL relationship with the first antenna port; or, two antenna ports have the same parameters; or, the parameter difference between two antenna ports is less than a certain threshold. The parameters may include one or more of the following: delay spread, Doppler spread, Doppler shift, average delay, average gain, and spatial receive parameters. The spatial receive parameters may include one or more of the following: angle of arrival (AOA), average AOA, AOA spread, angle of departure (AOD), average AOD, AOD spread, receive antenna spatial correlation parameters, transmit antenna spatial correlation parameters, transmit beam, receive beam, and resource identifier.

In the NR protocol, QCL relationships may be classified into four types based on different parameters, as shown in Table 3:

**Table 1**

| QCL Type | Description |
|---|---|
| QCL Type A | Doppler shift, Doppler spread, average delay, delay spread, |
| QCL type B | Doppler shift, Doppler spread |
| QCL type C | Doppler shift, average delay |
| QCL type D | Spatial Rx parameters |

When an identifier of each beam set and an identifier of each beam in each beam set are defined for multiple beam sets, QCL information corresponding to each beam in each beam set is defined, and each beam set is represented by a different Beam-Index. For example, as shown in Table 2, QCL information corresponding to each beam in the beam set A ({a0, a1, a2,...}) is represented by different Beam-Index es.

**Table 2**

| Beam set A | QCL information |
|---|---|
| a0 | Beam-Index 0 |
| a1 | Beam-Index 1 |
| a2 | Beam-Index 2 |
| ... | ... |

Here, the Beam-Index and TCI-StateId serve similar purposes, both being indices used to distinguish different beams. The Beam-Indices used in different beam sets can be the same. For example, the QCL information corresponding to each beam in beam set B ({b0, b1, b2,...}) can also be represented using Beam-Indices 0 to 2. The network device side can distinguish between these sets based on the beam set identifiers.

When all beams for the relay device are uniformly numbered, the network device and the relay device directly identify QCL information corresponding to different beams by using a beam index. As shown in Table 3 below, it is assumed that a maximum quantity of beams corresponding to panel A is M, and beam indexes corresponding to the panel A are identified by using beam indexes 0 to beam index M-1; and a maximum quantity of beams corresponding to panel B is N, and beam indexes corresponding to the panel B are identified by using beam indexes M to beam index M+N-1.

**Table 3**

| Beam set | QCL information |
|---|---|
| {a0, a1, a2,..., a(M-1)} | Beam-Index 0, Beam-Index 1,..., Beam-Index M-1 |
| {b0, b1, b2,..., b(N-1)} | Beam-Index M, Beam-Index M+1,..., Beam-Index M+N-1 |
| ... | ... |

In a scenario where network devices and terminal devices communicate through a relay device, how to implement beam management for the network device, the relay device, and the terminal device to determine the communication beams actually used by the network device and the terminal device is an issue that remains to be resolved. The embodiments of this application provide a relay communication method, where the network device may configure and activate a forwarding resource for the relay device, enabling the relay device to forward reference signals transmitted between the network device and the terminal device. This allows the terminal device to measure the reference signals forwarded by the relay device from the network device, or the network device to measure the reference signals forwarded by the relay device from the terminal device, thereby achieving beam management in a relay scenario.

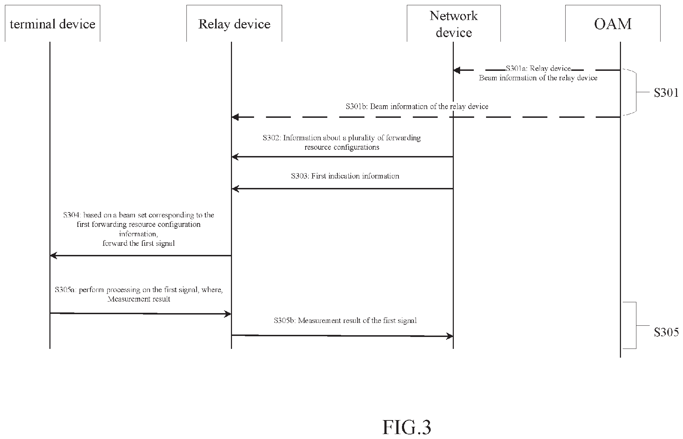

Specifically, as illustrated in Figure 3, a method for relay communication is schematically shown, which mainly includes the following steps.

S301: The relay device and the network device obtain beam information of the relay device from a third-party network element. The beam information of the relay device is used to indicate the beam distribution on the relay device. For example, the beam information may include one or more of the following items: an identifier of each beam set included in the relay device; an identifier of each beam included in each beam set; an identifier of quasi co-location information corresponding to each beam. The specific implementation can be understood with reference to the aforementioned descriptions of beam-related terms. For instance, one beam set corresponds to one panel of the relay device, where the identifier of the beam set may be the ID of the beam set or an identifier (panel ID) of the corresponding panel; the identifier of the beam may be a beam ID, and the identifier of the quasi co-location information may be represented by a Beam-Index.

Optionally, the third-party network element may be an operation, administration, and maintenance (OAM) device. As illustrated in Figure 3, S301 includes S301a and S301b, where S301a illustrates that the OAM device configures the beam information of the relay device and sends it to the network device; S301b illustrates that the OAM device sends the beam information of the relay device to the relay device.

In addition, in a possible implementation, the beam information of the relay device may be determined by the network device itself. For example, the relay device reports its own beam capability information to the network device, and the network device configures the beam information of the relay device for the relay device based on this beam capability information. Alternatively, the beam capability information of the relay device is defined by a protocol, and the network device can directly determine the beam information of the relay device. Here, the beam capability information of the relay device indicates the number of panels (or beam sets) supported by the relay device, and the maximum number of beams supported by each panel. In this implementation, the OAM device does not need to send the aforementioned beam information to the network device, meaning that step S301 is not performed. Therefore, S301 is an optional step, and S301a and S301b are illustrated with dashed lines in Figure 3.

S302. The network device sends a plurality of pieces of forwarding resource configuration information to the relay device.

The plurality of pieces of forwarding resource configuration information are corresponding to the plurality of beam sets of the relay device. For a specific correspondence and the forwarding resource configuration, refer to the following several manners for understanding.

Manner (1): A plurality of pieces of forwarding resource configuration information are in a one-to-one correspondence with a plurality of beam sets of the relay device, and each piece of forwarding resource configuration information in the plurality of pieces of forwarding resource configuration information includes an identifier of one beam set and an identifier of one forwarding resource. The identifier of the beam set may also be replaced with an identifier of a panel corresponding to the beam set, and is denoted as a panel Id. The forwarding resource configuration information is corresponding to one forwarding resource. Therefore, the forwarding resource configuration information may also be replaced and described as a forwarding resource.

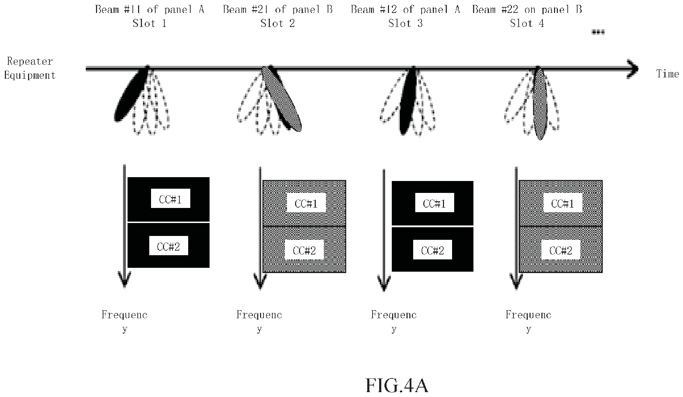

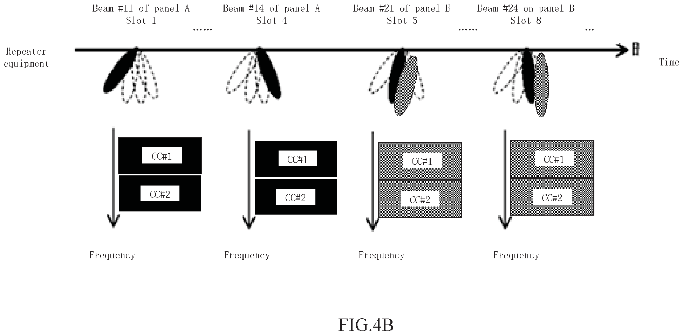

In a possible implementation, different forwarding resource configuration information corresponds to different time domain resources, and different forwarding resource configuration information corresponds to a same frequency domain resource. Alternatively, different forwarding resource configuration information corresponds to different time domain resources, and different forwarding resource configuration information corresponds to different frequency domain resources. For example, as shown in FIG. 4A, the relay device forwards signals by using two panels (panel A and panel B). Each panel occupies a same frequency domain resource (a CC#1 and a CC#2), but forwards reference signals on different time domain resources by using different panels. The CC may be a component carrier (component carrier, CC). For example, the relay device forwards the reference signal in the slot 1 by using the access beam # 11 of the panel A, forwards the reference signal in the slot 2 by using the access beam # 21 of the panel B, and forwards the reference signal in the slot 3 by using the access beam # 12 of the panel A. The reference signal is forwarded in the slot 4 by using the access beam # 22 of the panel B until all to-be-forwarded access side beams are traversed. For another example, FIG. 4B shows that the relay device forwards a reference signal in a slot 1 by using the first access beam # 11 of the panel A, and forwards a reference signal in a slot 2 by using the second access beam # 12 of the panel A. After traversing all beams of the panel A is completed, Assuming that a total quantity of beams of the panel A is 4, the relay device may forward the reference signal in the slot 5 by using the first access beam # 21 of the panel B, and forward the reference signal in the slot 8 by using the fourth access beam # 24 of the panel B, until traversing all to-be-forwarded access side beams.

In this implementation, the types of forwarding resources corresponding to different forwarding resource configuration information may be different, and configuration manners corresponding to different types of forwarding resources are different.
(1) For example, the type of the forwarding resource of the relay device is a periodic resource or a semi-persistent resource. The forwarding resource configuration information may be configured by higher layer signaling, and a forwarding resource configuration information may be denoted as FwdResource.

When an identifier of each beam set and an identifier of each beam in each beam set are defined for multiple beam sets, the format of FwdResource may be represented as follows:

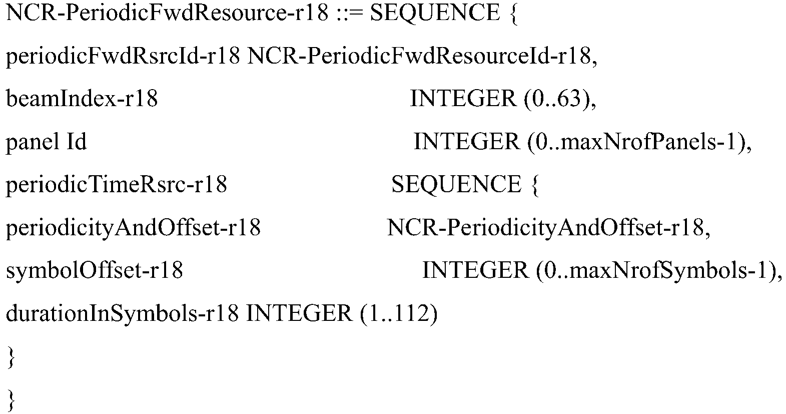

In the case where all beams for the relay device are uniformly numbered, the format of FwdResource may be represented as follows:

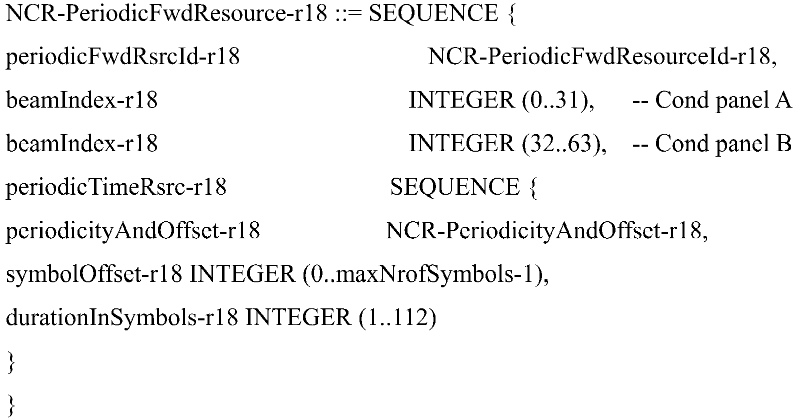

In the above content, periodicFwdRsrcId-r18 indicates the identifier of the forwarding resource; beamIndex-r18 represents the identifier (index) of a beam, where, when all beams for the relay device are uniformly numbered, and the identifier of the access-side beam of the relay device is not bound to the panel Id, in an implementation of higher layer signaling configuration, beamIndex 0~31 are by default access-side beams of panel A, and beamIndex 32~63 are by default access-side beams of panel B, where the beam index range of each panel does not exceed its maximum beam capability; panel Id indicates the panel corresponding to the forwarding resource or the beam set corresponding to the forwarding resource, and maxNrofPanels indicates the maximum number of panels of the relay device; periodicTimeRsrc-r18 indicates the periodic time resource of the forwarding resource; periodicityAndOffset-r18 indicates the periodicity and time offset of the forwarding resource, where the time offset value generally refers to the slot offset; symbolOffset-r18 indicates the symbol offset corresponding to the forwarding resource, and maxNrofSymbols indicates the maximum number of symbols; durationInSymbols-r18 indicates the duration of the symbols, or may also be understood as the number of symbols.

(2) Taking an example where the forwarding resource type of the relay device is an aperiodic resource, the forwarding resource configuration information may be configured by higher layer signaling.

When identifiers of different beam sets are defined for multiple beam sets and identifiers of beams in each beam set are defined, a panel Id may be introduced into the aperiodic forwarding time resource (AperiodicFwdTimeResource) in higher layer signaling to identify a correspondence between the aperiodic forwarding time resource and the panel (or beam set). When all beams of the relay device are uniformly numbered, the forwarding resource is configured according to the aperiodic forwarding time resource (AperiodicFwdTimeResource) in higher layer signaling, without introducing the panel Id.

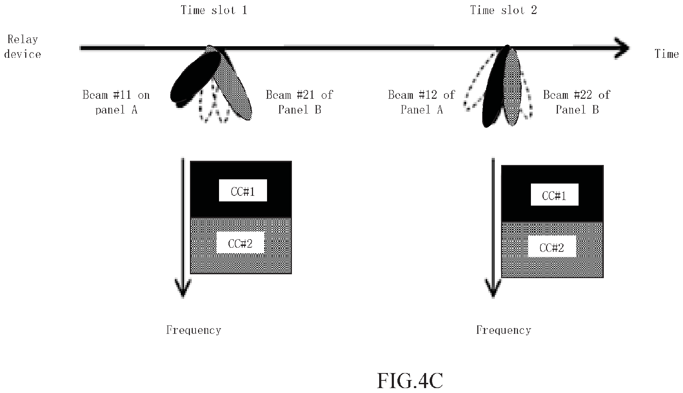

In another possible implementation, different forwarding resource configuration information corresponds to the same time domain resource, while different forwarding resource configuration information corresponds to different frequency domain resources. For example, as illustrated in FIG. 4C, the relay device performs signal forwarding at the same time using two panels (panel A and panel B), where panel A occupies the frequency domain resource CC#1, and panel B occupies the frequency domain resource CC#2.

Optionally, that different forwarding resource configuration information corresponds to different frequency domain resources specifically includes that different forwarding resource configuration information corresponds to different subbands. The subband is a type of frequency domain range, and the subband may alternatively be replaced with a component carrier (component carrier, CC), a cell, a passband, a frequency band, or another name. Based on this, each piece of forwarding resource configuration information in the plurality of pieces of forwarding resource configuration information further includes an identifier of a subband in addition to the foregoing possible implementation manner.

Similarly, in this implementation, different forwarding resource configuration information may correspond to different types of forwarding resources, and different types of forwarding resources correspond to different configuration manners.
(1) For example, when the type of the forwarding resource of the relay device is a periodic resource or a semi-persistent resource, the forwarding resource configuration information may be configured by higher layer signaling, and a piece of forwarding resource configuration information may be denoted as FwdResource. For example, when an identifier of each beam set and an identifier of each beam in each beam set are defined for a plurality of beam sets, the format of FwdResource may be represented as follows: 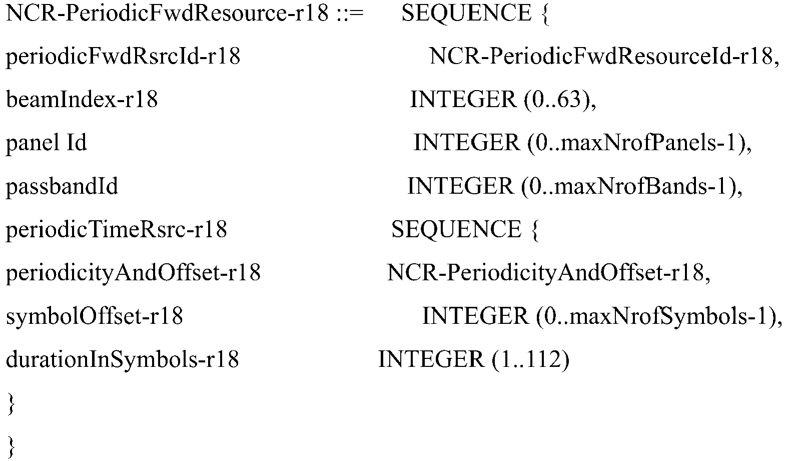 The parameters mentioned in the format of FwdResource may be understood with reference to the foregoing descriptions, and details are not described again in this embodiment of this application. In addition, passband Id refers to an identifier of a subband, and maxNrofBands refers to a maximum quantity of subbands in the frequency domain.
(2) Using an example in which the type of the forwarding resource of the relay device is an aperiodic resource, the forwarding resource configuration information may be configured by higher layer signaling.

When an identifier of each beam set and an identifier of each beam in each beam set are defined for multiple beam sets, the panel Id and passbandId may be introduced into the non-periodic forwarding time resource (AperiodicFwdTimeResource) in higher layer signaling to identify a correspondence between the non-periodic forwarding time resource and the panel (or beam set) and between the non-periodic forwarding time resource and the subband. When all beams of the relay device are uniformly numbered, the forwarding resource is configured according to the non-periodic forwarding time resource (AperiodicFwdTimeResource) in higher layer signaling, without introducing the panel Id and passbandId.

Method (2): Each piece of forwarding resource configuration information in the plurality of pieces of forwarding resource configuration information corresponds to at least one beam set in the plurality of beam sets of the relay device. One forwarding resource set corresponds to at least one beam set of the relay device, and a plurality of forwarding resources in the one forwarding resource set are in a one-to-one correspondence with a plurality of beams included in each beam set in the at least one beam set. An identifier of the beam set may also be replaced with an identifier of a panel corresponding to the beam set, denoted as panel Id. Each piece of forwarding resource configuration information corresponds to one forwarding resource set, so that the foregoing forwarding resource configuration information may also be alternatively described as a forwarding resource set.

For example, assuming that each beam set is in a one-to-one correspondence with a panel, and each piece of forwarding resource configuration information is in a one-to-one correspondence with a beam set, each panel on the relay device corresponds to one forwarding resource set (FwdResourceSet), and an identifier (FwdResourceSetId) of the forwarding resource set may be used to distinguish the panels. Based on this, the network device configures a plurality of FwdResourceSets, where each FwdResourceSet includes one FwdResourceSetId and one or more forwarding resources, and each forwarding resource corresponds to an access-side beam on a panel corresponding to the FwdResourceSetId.

In this manner, different time domain resources are corresponding to different forwarding resource sets, and frequency domain resources are the same or different. The types of forwarding resources corresponding to different forwarding resource configuration information may be different, and different types of forwarding resources correspond to different configuration manners.
(1) For example, when the type of the forwarding resource of the relay device is a periodic resource or a semi-persistent resource, the forwarding resource configuration information may be configured by higher layer signaling. A piece of forwarding resource configuration information may be denoted as FwdResourceSet. A format of the FwdResourceSet may be represented as follows: 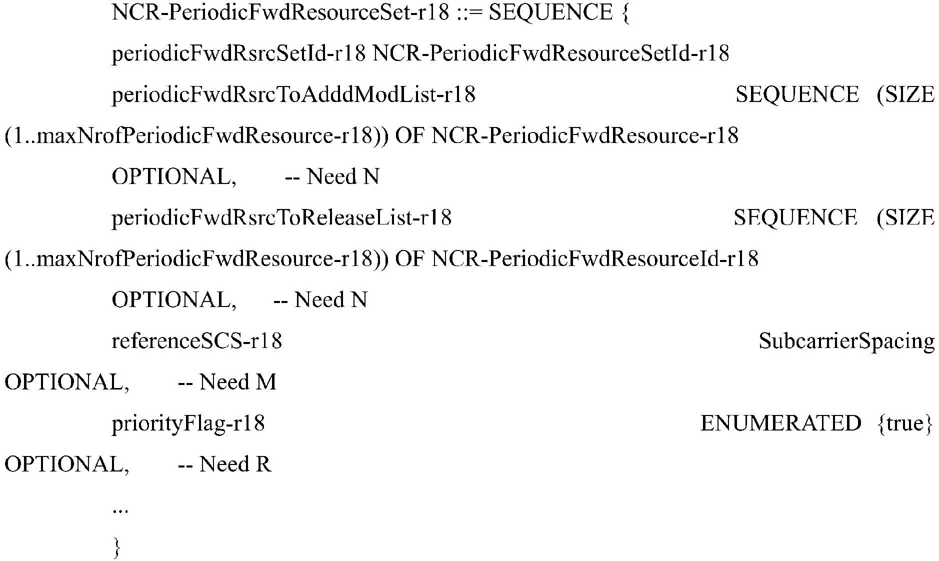 In the above content, periodicFwdRsrcSetId-r18 indicates an identifier of a forwarding resource set; periodicFwdRsrcToAdddModList indicates a list of newly added forwarding resources, periodicFwdRsrcToReleaseList-r18 indicates a list of released forwarding resources, and maxNrofPeriodicFwdResource-r18 refers to the maximum value of the identifier of the forwarding resource; referenceSCS refers to a reference subcarrier spacing; priorityFlag-r18 refers to a priority flag.
(2) Taking an example where the type of the forwarding resource of the relay device is an aperiodic resource, the forwarding resource configuration information may be configured by higher layer signaling.

When different identifiers of beam sets and identifiers of beams in each beam set are defined for multiple beam sets, the panel Id and passbandId may be introduced in the aperiodic forwarding configuration (AperiodicFwdConfig) in higher layer signaling to identify the correspondence between the aperiodic forwarding resource set and the panel (or beam set) and between the panel (or beam set) and the subband. When all beams of the relay device are uniformly numbered, the forwarding resource configuration is performed according to the aperiodic forwarding configuration (AperiodicFwdConfig) in higher layer signaling, without introducing the panel Id and passbandId.

Optionally, in the foregoing solution, when the forwarding resource configuration information does not include the identifier (such as the panel Id) of the beam set, the correspondence between the forwarding resource configuration information and the beam set may be further determined (or referred to as binding) based on values of specified parameters in different forwarding resource configuration information. For example, when the type of the forwarding resource is periodic or semi-persistent, beam sets corresponding to different forwarding resource configuration information may be distinguished by using period sizes of forwarding resources (or forwarding resource sets) in the forwarding resource configuration information. In other words, period sizes in forwarding resource configuration information corresponding to different beam sets are different. For example, when the type of the forwarding resource is aperiodic, beam sets corresponding to different forwarding resource configuration information may be distinguished by using a value of an aperiodic forwarding time resource index (AperiodicFwdTimeResourceId). In other words, AperiodicFwdTimeResourceId in forwarding resource configuration information corresponding to different beam sets is different. For example, when the type of the forwarding resource is aperiodic, a parity classification of the aperiodic forwarding time resource index AperiodicFwdTimeResourceId may be used to distinguish beam sets corresponding to different forwarding resource configuration information. For example, the relay device includes a panel A and a panel B. Each panel is corresponding to one beam set. It may be defined that forwarding resource configuration information whose AperiodicFwdTimeResourceId is an odd number corresponds to panel A, and forwarding resource configuration information whose AperiodicFwdTimeResourceId is an even number corresponds to panel B. For example, when the forwarding resource configuration information includes an identifier of a subband, and different forwarding resource configuration information corresponds to different subbands, different beam sets may be predefined to be corresponding to different subband identifiers, so as to indirectly indicate the correspondence between the forwarding resource configuration information and the beam set. For another example, when the type of the forwarding resource is periodic or semi-persistent, the network device may send a plurality of pieces of radio resource control (radio resource control, RRC) signaling, where the plurality of pieces of RRC signaling correspond to a plurality of beam sets of the relay device, and each piece of RRC signaling carries one piece of forwarding resource configuration information. When the type of the transmit resource is aperiodic, corresponding to different beam sets on the relay device, downlink control information (downlink control information, DCI) in different modes may be used to indicate the forwarding resource configuration information.

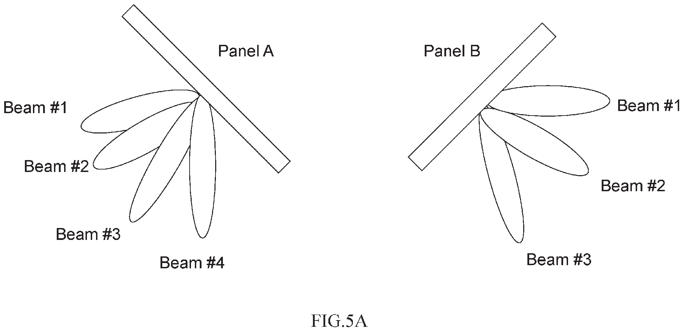

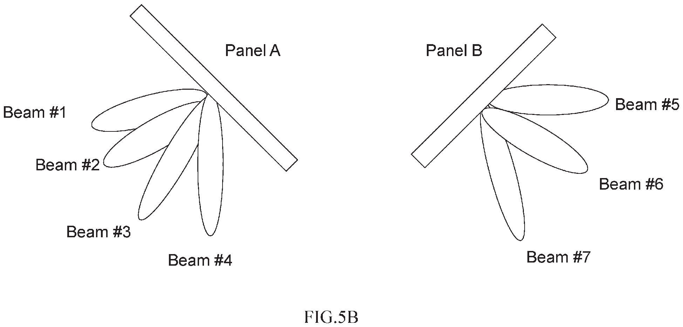

In addition, during specific implementation, there may be different beam information corresponding to different panels on the relay device. For example, there may be a case where the number of beams in the beam set corresponding to different panels is different. In this case, when configuring the forwarding resource, the network device generally performs unified configuration according to the maximum number of beams. For example, as shown in FIG. 5A, panel A corresponds to a beam set that includes four beams, which are denoted as beam #1, beam #2, beam #3, and beam #4, and panel B corresponds to a beam set that includes three beams, which are denoted as beam #1, beam #2, and beam #3. In this case, the network device configures the forwarding resource according to the configuration where each beam set includes four beams. In this case, an indication error may occur where the beam index indicated by the network device for a certain panel exceeds the maximum number of beams corresponding to that panel. For example, for panel B, the beam index #4 indicated exceeds the maximum beam index #3 supported by panel B. In response to this indication error, in a possible design, the relay device may feed back an error indication to the network device, and the relay device does not forward signals within the time of the forwarding resource corresponding to panel B. In another possible design, such beam indices may be predefined. For example, the relay device may understand the beam index #4 that exceeds the beam index supported by panel B as beam #1 corresponding to panel B, that is, the relay device may map the beam index that exceeds the maximum beam index to another beam index less than the maximum beam index in a cyclic manner. Similarly, when all beams of the relay device are uniformly numbered, for example, as shown in FIG. 5B, panel A corresponds to a beam set that includes four beams, which are denoted as beam #1, beam #2, beam #3, and beam #4, and panel B corresponds to a beam set that includes three beams, which are denoted as beam #5, beam #6, and beam #7. If the network device indicates beam index #8 for panel B, which exceeds the maximum beam index #7 supported by panel B, the relay device may feed back an error indication to the network device or remap the beam index, and does not forward signals within the time of the forwarding resource corresponding to panel B.

S303: The network device sends first indication information to the relay device.

Specifically, the first indication information is used to indicate to forward the first signal based on at least one beam set corresponding to the first forwarding resource configuration information in the plurality of forwarding resource configuration information, or may be understood as: the first indication information is used to activate the forwarding resource or the set of forwarding resources in the first forwarding resource configuration information in S302. It may be understood that activation of the forwarding resource is mainly implemented for a case in which the forwarding resource type is a semi-persistent forwarding resource or an aperiodic forwarding resource, and for a case in which the forwarding resource type is a periodic forwarding resource, the resource activation procedure in S303 does not need to be performed.

For example, the forwarding resource corresponding to the first forwarding resource configuration information is a semi-persistent forwarding resource. The first indication information may be a media access control-control element (MAC-control element, MAC-CE) or some fields in the MAC-CE. The following describes several designs of the MAC-CEs in a case corresponding to S302.

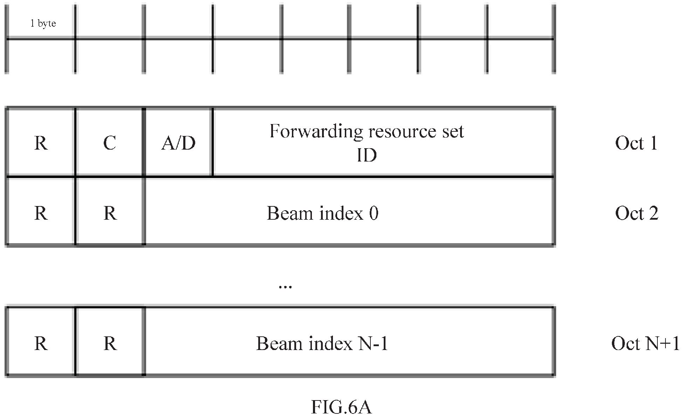

Design 1: When the first forwarding resource configuration information includes an identifier (for example, a panel ID (panel Id)) of a beam set, it may be considered that a binding relationship between a forwarding resource (or a forwarding resource set) and the panel ID has been formed in the resource configuration process in S302. In this case, the network device carries only an identifier of the forwarding resource (or the forwarding resource set) in the MAC-CE. For example, when different panels (or referred to as different beam sets) correspond to different forwarding resource sets, the network device may activate a plurality of forwarding resource sets by using a plurality of MAC-CEs, where identifiers of the forwarding resource sets included in different MAC-CEs are different. The identifier of the forwarding resource set may be an identifier of the forwarding resource set (Resource set ID). Specifically, a structure of the MAC-CE is shown in FIG. 6A. For meanings of fields in the MAC-CE, refer to the following content for understanding.

The forwarding resource set ID (Resource set ID) indicates a forwarding resource set in the first forwarding resource configuration information. As shown in FIG. 6A, the Resource set ID occupies five bytes in the MAC-CE.

A/D: indicates whether the forwarding resource set corresponding to the resource set ID is activated. For example, if the value of A/D is 1, it indicates that the forwarding resource set corresponding to the resource set ID is activated; or if the value of A/D is 0, it indicates that the forwarding resource set corresponding to the resource set ID is deactivated.

C: indicates whether the beam index (or the panel ID field) exists. For example, if the value of C is 1, it indicates that the beam index (or the panel ID field) exists; or if the value of C is 0, it indicates that the beam index (or the panel ID field) does not exist. It may be understood that the field C takes effect only when the value of A/D is 1.

R: refers to a reserved bit (reserved bit). In this embodiment of this application, a value of the reserved bit is set to 0.

Beam index (beam index ID): indicates a beam in a beam set corresponding to the forwarding resource set corresponding to the resource set ID.

Design 2: If the first resource configuration information does not include an identifier (for example, a panel ID (panel Id)) of the beam set, it may be considered that there is no binding relationship between the forwarding resource (or the forwarding resource set) and the panel ID in the resource configuration process in S302. Based on this, the network device may add an identifier of the forwarding resource (or the forwarding resource set) and an identifier (for example, the panel Id) of the beam set to the MAC-CE.

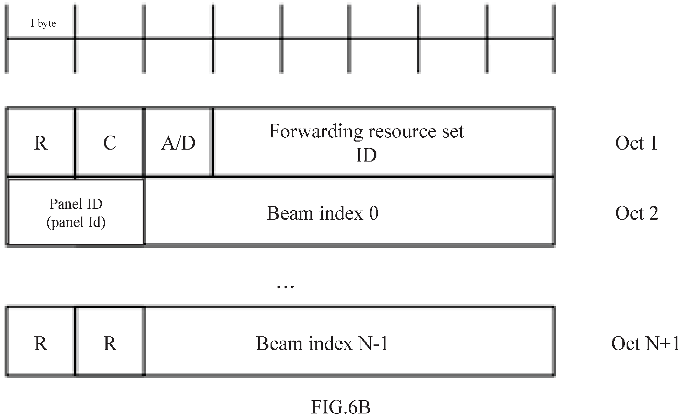

For example, different panels (or different beam sets) correspond to different forwarding resource sets, and the network device may activate a plurality of forwarding resource sets by using a plurality of MAC-CEs, where the MAC-CEs include different identifiers (Resource set ID) of the forwarding resource sets. A structure of the MAC-CE is shown in FIG. 6B. A panel ID (panel) in the MAC-CE indicates a beam set corresponding to the forwarding resource set corresponding to the Resource set ID. For meanings of other fields, refer to the descriptions in Design 1. Details are not described again in this embodiment of this application.

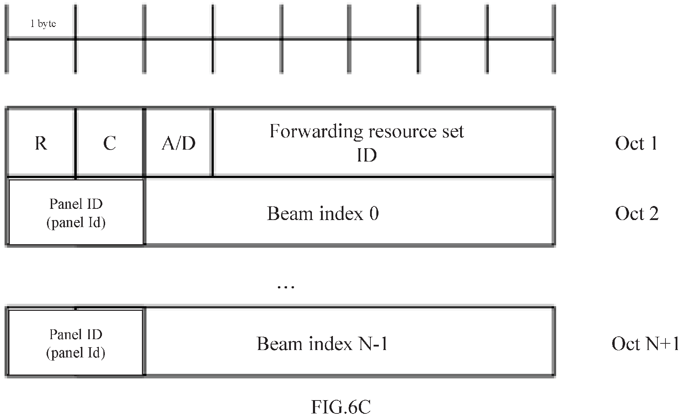

For another example, one forwarding resource set corresponds to a plurality of beam sets, and the network device may activate, by using one MAC-CE, one forwarding resource set corresponding to the plurality of beam sets. A structure of the MCA-CE is shown in FIG. 6C. The MCA-CE includes an identifier (Resource set ID) of one forwarding resource set, and identifiers (illustrated by panel IDs) of the corresponding plurality of beam sets. For meanings of the fields in the MCA-CE, refer to the descriptions in Design 1 and Design 2 for understanding. Details are not described in this embodiment of this application.

In addition, optionally, corresponding to the case described in S302 where time domain resources corresponding to different forwarding resource configuration information are the same but frequency domain resources are different (that is, frequency division forwarding), the network device may further add an identifier (for example, a passband Id) of a subband to the MAC-CE illustrated in FIG. 6B or FIG. 6C.

For example, the type of the forwarding resource corresponding to the first forwarding resource configuration information is an aperiodic forwarding resource. In this case, the first indication information may be DCI_2_8 or some fields in DCI_2_8; or the first indication information may be newly defined DCI. In a possible implementation, if the first forwarding resource configuration information includes an identifier (for example, a panel Id) of a beam set and an identifier (passband Id) of a subband, the DCI 2_8 does not need to introduce a new field when being understood according to the format defined in the protocol. In another possible implementation, the network device may introduce a new field in the DCI 2_8 to indicate an identifier of a beam set and/or subband information corresponding to the first forwarding resource configuration information.

S304: The relay device forwards the first signal based on the beam set corresponding to the first forwarding resource configuration information.

In a possible design, the first signal comes from the terminal device, and may be considered as an uplink signal forwarded by the relay device to the network device. In another possible design, the first signal comes from the network device, and may be considered as a downlink signal forwarded by the relay device to the terminal device.

FIG. 3 uses an example in which the first signal comes from the network device. S304 shows that the relay device forwards, to the terminal device, the first signal from the network device. In a possible implementation, the relay device performs, based on the information such as the forwarding resource (forwarding resource set) and the amplification gain configured by the higher layer signaling in S302, and the information such as the activated forwarding resource, beam/panel, and subband in S303, amplification and forwarding of the first signal on a specified panel and/or a specified subband by using a specified beam and a specified forwarding resource.

In a possible application scenario, the first signal may be a reference signal used for channel measurement, for example, a CSI-RS; correspondingly, optionally, the terminal device may further perform S305.

S305: The terminal device sends the measurement result of the first signal to the network device through the relay device.

S305 is implemented through the following two sub-steps: S305a: The terminal device sends the measurement result of the first signal to the relay device; and S305b: The relay device forwards the received measurement result of the first signal to the network device.

Specifically, the terminal device receives and measures the first signal, so as to obtain a measurement result of the first signal. The measurement result may indicate one or more of the following: a channel quality indicator (channel quality indicator, CQI), a reference signal received power (reference signal received power, RSRP), a reference signal received quality (reference signal received quality, RSRQ), a received signal strength (received signal strength indicator, RSSI), a precoding matrix indicator (precoding matrix indicator, PMI), a transmitted precoding matrix indicator (transmitted precoding matrix indicator, TPMI), a rank indicator (rank indicator, RI), or referred to as rank information (rank information, RI), a layer indicator (layer indicator, LI), a channel state information resource index (CSI-RS indicator, CRI), or a synchronization/broadcast signal block resource index (synchronization signal/physical broadcast channel block resource indicator, SSBRI).

Accordingly, the network device may determine, based on the received measurement results, a beam set or panel with the best signal reception quality, and then instruct the relay device to forward a signal using the beam set or panel with the best signal reception quality. It can be understood that the beam set with the best signal reception quality may also be referred to as an optimal beam set, and the panel with the best signal reception quality may also be referred to as an optimal panel. The best signal reception quality is mainly reflected in the fact that the reference signal received power (RSRP) or the signal to interference plus noise ratio (SINR) value is the largest.

The foregoing solution provides a forwarding resource configuration for multiple panels on the relay device, which can achieve simultaneous signal forwarding using multiple panels, thereby helping quickly determine an optimal panel and improving subsequent communication performance.

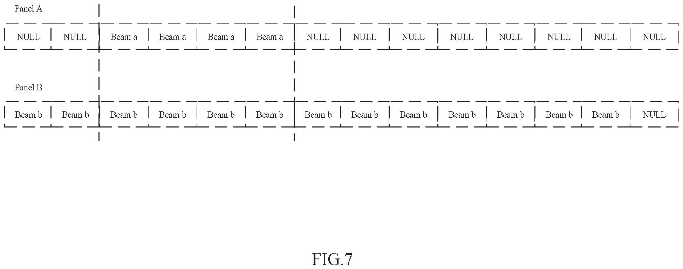

In addition, considering actual applications, there are relay devices capable of simultaneous transmission using multiple panels, and there are also relay devices that do not support simultaneous transmission using multiple panels. In a possible implementation, for a relay device capable of simultaneous transmission using multiple panels, beams of multiple panels may be configured at the same time; however, for a relay device that supports only time-division transmission using multiple panels, when receiving forwarding resource configurations corresponding to different panels at the same time, forwarding priorities corresponding to different panels or different forwarding resource configuration information may be defined. For example, as shown in FIG. 7, the network device configures the relay device to forward a signal through beam a on panel A using the 3rd to 6th symbols in the slot, and forward a signal through beam b on panel B using the 1st to 14th symbols in the slot, while the relay device does not support simultaneous transmission using multiple panels. This results in a forwarding conflict when the 3rd to 6th symbols in the same slot are sent. In this case, forwarding priorities corresponding to different panels or different forwarding resource configuration information need to be defined.

In view of this situation, the embodiments of this application provide a manner of determining a forwarding priority corresponding to each piece of forwarding resource configuration information by combining a forwarding resource type, and for details, refer to the following example implementations.

For example, when the priorityFlag is not enabled in the periodic forwarding resource or the semi-persistent forwarding resource, the priority order is defined as aperiodic resource > semi-persistent resource > periodic resource. Based on this, when time domain resources corresponding to different pieces of forwarding resource configuration information overlap (for example, there is a conflict slot), a panel corresponding to forwarding resource configuration information with a higher priority normally performs forwarding in the conflict slot, and a panel corresponding to forwarding resource configuration information with a lower priority becomes invalid in the entire conflict slot; or, a panel corresponding to forwarding resource configuration information with a higher priority normally performs forwarding in the conflict slot, and a panel corresponding to forwarding resource configuration information with a lower priority performs forwarding in another time without conflict; or, a panel corresponding to forwarding resource configuration information with a higher priority normally performs forwarding in the conflict slot, and a panel corresponding to forwarding resource configuration information with a lower priority performs forwarding in a next slot. In addition, when different panels correspond to the same forwarding resource type in the conflict slot, the relay device may perform error feedback, or the network device dynamically delivers a priority of forwarding performed by the panel.

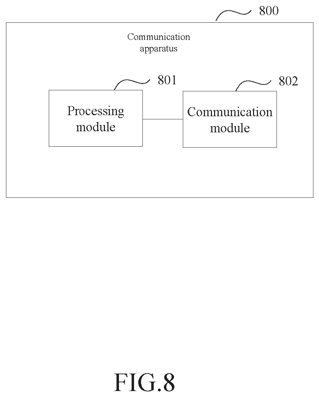

Based on the same concept, referring to FIG. 8, an embodiment of this application provides a communication apparatus 800. The communication apparatus 800 includes a processing module 801 and a communication module 802. The communication apparatus 800 may be a relay device, or may be a communication apparatus applied to a relay device or used in conjunction with a relay device, and capable of implementing a precoding matrix transmission method executed on the relay device side; or the communication apparatus 800 may be a network device, or may be a communication apparatus applied to a network device or used in conjunction with a network device, and capable of implementing a precoding matrix transmission method executed by the network device.

The communication module may also be referred to as a transceiver module, transceiver, transceiver machine, or transceiver apparatus, or the like. The processing module may also be referred to as a processor, processing board, processing unit, or processing apparatus, or the like. Optionally, the communication module is configured to perform the sending operation and the receiving operation on the relay device side or the network device side in the foregoing method. A component in the communication module that is configured to implement a receiving function may be considered as a receiving unit, and a component in the communication module that is configured to implement a sending function may be considered as a sending unit, that is, the communication module includes a receiving unit and a sending unit.

When the communication apparatus 800 is applied to a relay device, the processing module 801 may be configured to implement a processing function of the relay device in the example in FIG. 3, and the communication module 802 may be configured to implement a receiving and sending function of the relay device in the example in FIG. 3. Optionally, the communication apparatus may be understood with reference to the fourth aspect and the possible designs in the tenth aspect in the content of the present invention.

When the communication apparatus 800 is applied to a network device side, the processing module 801 may be configured to implement a processing function of the network device in the example in FIG. 3, and the communication module 802 may be configured to implement a receiving and sending function of the network device in the example in FIG. 3. Optionally, the communication apparatus may be understood with reference to the fifth aspect and the possible designs in the fifth aspect in the content of the present invention.

In addition, it should be noted that, in a possible design, the communication module and/or the processing module may be implemented by using a virtual module. For example, the processing module may be implemented by using a software function unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and perform an input operation (corresponding to the foregoing receiving operation) and an output operation (corresponding to the foregoing sending operation); the processing module is an integrated processor, a microprocessor, or an integrated circuit.

The division into modules in the embodiments of this application is illustrative and represents merely a logical functional division; there may be other division methods in actual implementation. Additionally, the functional modules in each example of the embodiments of this application may be integrated into a single processor, may exist as separate physical entities, or two or more modules may be integrated into one module. The integrated module may be implemented in the form of hardware, or may be implemented in the form of software functional modules.

Based on the same technical concept, an embodiment of this application further provides a communication apparatus 900. For example, the communication apparatus 900 may be a chip or a chip system. Optionally, in the embodiments of this application, the chip system may be formed by a chip, or may include a chip and other discrete components.

The communication apparatus 900 may be configured to implement the functions of any network element in the communication system described in the foregoing examples. The communication apparatus 900 may include at least one processor 910. Optionally, the processor 910 is coupled to a memory, where the memory may be located within the apparatus; or the memory and the processor may be integrated together; or the memory may be located outside the apparatus. For example, the communication apparatus 900 may further include at least one memory 920. The memory 920 stores the necessary computer program, computer program instructions, and/or data for implementing any of the foregoing examples; the processor 910 may execute the computer program stored in the memory 920 to complete the method in any of the foregoing examples.

The communication apparatus 900 may further include a communication interface 930, and the communication apparatus 900 may exchange information with another device by using the communication interface 930. For example, the communication interface 930 may be a transceiver, a circuit, a bus, a module, a pin, or another type of communication interface. When the communication apparatus 900 is an apparatus or a circuit of a chip type, the communication interface 930 in the apparatus 900 may also be an input/output circuit, which may input information (or receive information) and output information (or send information). The processor is an integrated processor, a microprocessor, an integrated circuit, or a logic circuit, and the processor may determine output information based on the input information.

The coupling in the embodiments of this application is an indirect coupling or a communication connection between apparatuses, units, or modules, and may be implemented in an electrical, mechanical, or another form, and is used for information exchange between the apparatuses, units, or modules. The processor 910 may operate in collaboration with the memory 920 and the communication interface 930. This application does not limit a specific connection medium between the processor 910, the memory 920, and the communication interface 930 in the embodiments of this application.

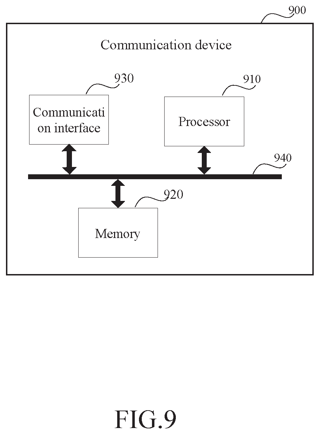

Optionally, referring to FIG. 9, the processor 910, the memory 920, and the communications interface 930 are connected to each other through a bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to indicate the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in the embodiments of this application. The general-purpose processor may be a microprocessor or any conventional processor, or the like. The steps of the method in the embodiments of this application may be directly implemented by hardware processors, or may be implemented by a combination of hardware and software modules in the processors.

In the embodiments of this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory may be any other medium that can carry or store expected program code in a form of an instruction or a data structure and that can be accessed by a computer, but is not limited thereto. The memory in the embodiments of this application may alternatively be a circuit or any other apparatus that can implement a storage function, and is configured to store program instructions and/or data.

In a possible implementation, the communication apparatus 900 may be applied to a relay device. Specifically, the communication apparatus 900 may be a relay device, or may be an apparatus that can support the relay device and implement a function of the relay device in any one of the foregoing examples. The memory 920 stores a computer program (or an instruction) and/or data for implementing the function of the relay device in any one of the foregoing examples. The processor 910 may execute the computer program stored in the memory 920, to complete the method performed by the relay device in any one of the foregoing examples. When the communication apparatus is applied to the relay device, the communication interface in the communication apparatus 900 may be configured to interact with a network device, and send information to the network device or receive information from the network device.

In another possible implementation, the communication apparatus 900 may be applied to a network device, and specifically, the communication apparatus 900 may be a network device, or may be an apparatus that can support a network device and implement a function of the network device in any one of the foregoing examples. The memory 920 stores a computer program (or instructions) and/or data for implementing the function of the network device in any one of the foregoing examples. The processor 910 may execute the computer program stored in the memory 920, to complete the method performed by the network device in any one of the foregoing examples. When the communication apparatus is applied to the network device, the communication interface in the communication apparatus 900 may be configured to interact with the relay device, and send information to the relay device or receive information from the relay device.

The communication apparatus 900 provided in this example may be applied to a network device to complete the method performed on the network device side, or may be applied to a relay device to complete the method performed by the relay device. Therefore, for technical effects that can be achieved by the communication apparatus 900, refer to the foregoing method examples, and details are not described herein again.

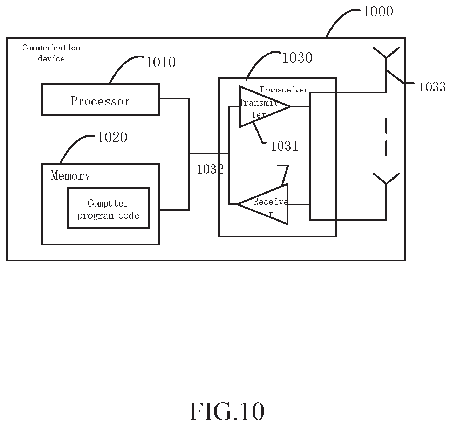

Based on the same technical concept, an embodiment of this application further provides a communication apparatus 1000. As illustrated in Figure 10, the communication apparatus 1000 may be a relay device, a processor of a relay device, or a chip. The communication apparatus 1000 may be configured to perform the operations performed by the relay device in the foregoing method embodiments.

When the communication apparatus 1000 is a relay device, FIG. 10 shows a simplified schematic structural diagram of a relay device. As shown in FIG. 10, the relay device includes a processor, a memory, and a transceiver. The memory may store computer program code, and the transceiver includes a transmitter 1031, a receiver 1032, a radio frequency circuit (not shown in the figure), an antenna 1033, and an input/output apparatus (not shown in the figure).

The processor is mainly configured to process communication protocols and communication data, control the relay device, execute software programs, process data of the software programs, and the like. The memory is mainly configured to store software programs and data. The radio frequency circuit is mainly configured to perform conversion between a baseband signal and a radio frequency signal, and process the radio frequency signal. The antenna is mainly configured to receive and transmit radio frequency signals in the form of electromagnetic waves. The input/output apparatus, such as a touchscreen, a display, a keyboard, and the like, is mainly configured to receive data input by a user and output data to the user. It should be noted that some types of relay devices may not have an input/output apparatus.

When data needs to be transmitted, the processor performs baseband processing on the data to be sent, and then outputs a baseband signal to the radio frequency circuit. The radio frequency circuit processes the baseband signal into a radio frequency signal and then sends the radio frequency signal outward in the form of electromagnetic waves through the antenna. When data is sent to the relay device, the radio frequency circuit receives the radio frequency signal through the antenna, converts the radio frequency signal into a baseband signal, and outputs the baseband signal to the processor. The processor then converts the baseband signal into data and processes the data. For ease of illustration, FIG. 10 shows only one memory, one processor, and one transceiver. In an actual relay device product, there may be one or more processors and one or more memories. The memory may also be referred to as a storage medium, a storage device, or the like. The memory may be disposed independently of the processor, or may be integrated with the processor. This is not limited in this embodiment of this application.

In the embodiments of this application, an antenna and a radio frequency circuit that have a transceiver function may be considered as a transceiver module of the relay device, and a processor that has a processing function may be considered as a processing module of the relay device.

As shown in Figure 10, the relay device includes a processor 1010, a memory 1020, and a transceiver 1030. The processor 1010 may also be referred to as a processing unit, processing board, processing module, processing apparatus, or the like, and the transceiver 1030 may also be referred to as a transceiver unit, transceiver, transceiver apparatus, or similar.

Optionally, the component in the transceiver 1030 that is configured to implement a receiving function may be considered as a receiving module, and the component in the transceiver 1030 that is configured to implement a transmitting function may be considered as a transmitting module, that is, the transceiver 1030 includes a receiver and a transmitter. The transceiver may sometimes also be referred to as a transceiver machine, transceiver module, or transceiver circuit, or the like. The receiver may sometimes also be referred to as a receiver machine, receiver module, or receiver circuit, or the like. The transmitter may sometimes also be referred to as a transmitter machine, transmitter module, or transmitter circuit, or the like.

For example, the processor 1010 is configured to perform the processing actions on the relay device side in the embodiment shown in FIG. 3, and the transceiver 1030 is configured to perform the transceiver actions on the relay device side in FIG. 3.

It should be understood that FIG. 10 is only an example instead of a limitation. The relay device that includes the transceiver module and the processing module may not depend on the structure shown in FIG. 10.

When the communication apparatus 1000 is a chip, the chip includes a processor and a transceiver. The transceiver may be an input/output circuit or a communications interface. The processor may be a processing module integrated on the chip, a microprocessor, or an integrated circuit. The sending operation of the relay device in the foregoing method embodiment may be understood as output of the chip, and the receiving operation of the relay device in the foregoing method embodiment may be understood as input of the chip.

Based on a same technical concept, an embodiment of this application further provides a communication apparatus 1100. The communication apparatus 1100 may be a network device or a chip. The communication apparatus 1100 may be configured to perform an operation performed by the network device in the foregoing method embodiment.

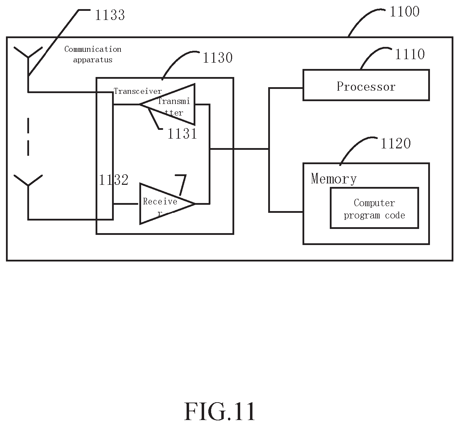

When the communication apparatus 1100 is a network device, for example, a base station, FIG. 11 is a schematic structural diagram of a simplified base station. The base station includes a part 1110, a part 1120, and a part 1130. The 1110 part is mainly used for baseband processing, controlling a base station, and the like. The part 1110 is usually a control center of the base station, and may be generally referred to as a processor, and is configured to control the base station to perform a processing operation on a network device side in the foregoing method embodiment. The 1120 part is mainly used to store computer program code and data. The 1130 part is mainly configured to transmit and receive a radio frequency signal and convert a radio frequency signal and a baseband signal. The part 1130 may be generally referred to as a transceiver module, a transceiver, a transceiver circuit, a transceiver, or the like. The transceiver module in part 1130 may also be referred to as a transceiver, a transceiver, or the like, and includes an antenna 1133 and a radio frequency circuit (not shown in the figure). The radio frequency circuit is mainly configured to perform radio frequency processing. Optionally, a component that is in part 1130 and that is configured to implement a receiving function may be considered as a receiver, and a component that is configured to implement a sending function may be considered as a transmitter. In other words, part 1130 includes a receiver 1132 and a transmitter 1131. The receiver may also be referred to as a receiving module, a receiver, a receiving circuit, or the like, and the transmitter may be referred to as a transmitting module, a transmitter, a transmitting circuit, or the like.

The 1110 section and the 1120 section may include one or more boards, and each board may include one or more processors and one or more memories. The processor is configured to read and execute programs in the memory to implement baseband processing functions and control of the base station. If there are multiple boards, these boards may be interconnected to enhance processing capabilities. As an optional implementation, it is also possible for multiple boards to share one or more processors, or for multiple boards to share one or more memories, or for multiple boards to simultaneously share one or more processors.

In an implementation, the transceiver module of the 1130 part is configured to perform the transceiver-related process executed by the network device in the embodiment illustrated in FIG. 3. The processor of the 1110 part is configured to perform the processing-related process executed by the network device in the embodiment illustrated in FIG. 3.

It should be understood that FIG. 11 is merely an example for illustration and not a limitation. The network device described above, which includes a processor, a memory, and a transceiver, may not necessarily rely on the structure shown in FIG. 11.

When the communication apparatus 1100 is a chip, the chip includes a transceiver and a processor. The transceiver may be an input/output circuit or a communications interface. The processor is a processor integrated on the chip, a microprocessor, or an integrated circuit. In the foregoing method embodiment, the sending operation of the network device may be understood as the output of the chip, and the receiving operation of the network device in the foregoing method embodiment may be understood as the input of the chip.

An embodiment of this application further provides a communications system. The communications system includes the relay device and the network device in the foregoing embodiments. The relay device is configured to perform all or some of the steps in the embodiment shown in FIG. 3. The network device is configured to perform all or some of the steps in the embodiment shown in FIG. 3.

All or some of the technical solutions provided in the embodiments of this application may be implemented by using software, hardware, firmware, or any combination thereof. When implemented by using software, all or some of the applications may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, a relay device, a network device, or another programmable apparatus. The computer instructions may be stored in a computer readable storage medium, or transmitted from one computer readable storage medium to another computer readable storage medium, for example, the computer instructions may be wired from a website site, computer, server, or data center (e.g., coaxial cable, optical fiber, digital subscriber line (DSL)) or wireless (e.g., infrared, wireless, microwave) transmission to another website site, computer, server, or data center. The computer-readable storage medium may be any usable medium accessible by a computer, or a data storage device such as a server or a data center that integrates one or more usable media. The usable medium may be a magnetic medium (e.g., a floppy disk, a hard disk, a magnetic tape), an optical medium (e.g., digital video disc (DVD)), or a semiconductor medium, or the like.

In the embodiments of this application, examples may be mutually referenced under a premise of no logical conflict. For example, methods and/or terms in method embodiments may be mutually referenced, functions and/or terms in apparatus embodiments may be mutually referenced, and functions and/or terms in an apparatus example and a method example may be mutually referenced.

It is clearly that a person skilled in the art can make various modifications and variations to embodiments of this application without departing from the scope of embodiments of this application. In this case, if these modifications and variations of embodiments of this application fall within the scope of the claims of embodiments of this application and their equivalent technologies, embodiments of this application are also intended to cover these modifications and variations.

## Claims

1. A relay communication method, comprising:
sending, by a network device, a plurality of pieces of forwarding resource configuration information to a relay device, wherein the plurality of pieces of forwarding resource configuration information correspond to a plurality of beam sets of the relay device, and each of the plurality of beam sets comprises a plurality of beams;
sending, by the network device, first indication information to the relay device, wherein the first indication information is used to indicate to forward a first signal based on a beam set corresponding to first forwarding resource configuration information in the plurality of forwarding resource configuration information; and the first signal is from a terminal device or the network device;
forwarding, by the relay device, the first signal based on the beam set corresponding to the first forwarding resource configuration information.

2. The method according to claim 1, wherein the plurality of forwarding resource configuration information is in a one-to-one correspondence with a plurality of beam sets of the relay device, and each piece of forwarding resource configuration information in the plurality of forwarding resource configuration information comprises an identifier of one beam set and an identifier of one forwarding resource.

3. The method according to claim 2, wherein the first indication information comprises an identifier of one forwarding resource in the first forwarding resource configuration information or an identifier of one beam set in the first forwarding resource configuration information.

4. The method according to claim 1, wherein each piece of the plurality of forwarding resource configuration information comprises an identifier of one forwarding resource set, the one forwarding resource set corresponds to at least one beam set of the relay device, and a plurality of forwarding resources in the one forwarding resource set are in a one-to-one correspondence with a plurality of beams included in each beam set in the at least one beam set.

5. The method according to claim 4, wherein the first indication information comprises an identifier of one forwarding resource set in the first forwarding resource configuration information and an identifier of at least one beam set, wherein the first forwarding resource configuration information corresponds to the at least one beam set.

6. The method according to any one of claims 1 to 5, wherein different pieces of forwarding resource configuration information correspond to different time domain resources, and/or different pieces of forwarding resource configuration information correspond to different frequency domain resources.

7. The method according to any one of claims 1 to 6, wherein different pieces of forwarding resource configuration information correspond to a same time domain resource, different pieces of forwarding resource configuration information correspond to different subbands, and each piece of the plurality of forwarding resource configuration information comprises an identifier of one subband.

8. The method according to any one of claims 1 to 7, further comprising:
the network device receives beam configuration information from a third-party network element; and/or
the relay device receives beam configuration information from a third-party network element;
wherein the beam configuration information is used to configure one or more of the following:
an identifier of each beam set included in the plurality of beam sets by the relay device;
an identifier of each beam included in each beam set;
an identifier of the quasi co-location information corresponding to each beam.

9. The method according to any one of claims 1 to 8, further comprising: The network device determines, based on the forwarding resource types corresponding to the plurality of forwarding resource configuration information, the forwarding priorities corresponding to the plurality of forwarding resource configuration information.

10. A communication apparatus, wherein the apparatus is applied to a relay device and comprises:
a communication module, configured to receive a plurality of pieces of forwarding resource configuration information from a network device, wherein the plurality of pieces of forwarding resource configuration information correspond to a plurality of beam sets of the relay device, and each of the plurality of beam sets comprises a plurality of beams;
the communication module is further configured to receive first indication information from the network device, wherein the first indication information is used to indicate to forward a first signal based on a beam set corresponding to first forwarding resource configuration information in the plurality of pieces of forwarding resource configuration information, and the first signal is from a terminal device or the network device;
a processing module, configured to forward the first signal through the communication module based on a beam set corresponding to the first forwarding resource configuration information.

11. A communication apparatus, wherein the apparatus is applied to a network device, and comprises:
a processing module, configured to send a plurality of pieces of forwarding resource configuration information to a relay device through a communication module, wherein the plurality of pieces of forwarding resource configuration information correspond to a plurality of beam sets of the relay device, and each of the plurality of beam sets comprises a plurality of beams;
the processing module is further configured to send first indication information to the relay device by using the communication module, wherein the first indication information is used to indicate to forward a first signal based on a beam set corresponding to first forwarding resource configuration information in the plurality of forwarding resource configuration information; and the first signal is from a terminal device or the network device.

12. The apparatus according to claim 10 or 11, wherein the plurality of forwarding resource configuration information is in a one-to-one correspondence with a plurality of beam sets of the relay device, and each piece of the forwarding resource configuration information comprises an identifier of one beam set and an identifier of one forwarding resource.

13. The apparatus according to claim 12, wherein the first indication information comprises an identifier of one forwarding resource in the first forwarding resource configuration information or an identifier of one beam set in the first forwarding resource configuration information.

14. The apparatus according to claim 10 or 11, wherein each piece of the forwarding resource configuration information in the plurality of forwarding resource configuration information comprises an identifier of one forwarding resource set, the one forwarding resource set corresponds to at least one beam set of the relay device, and a plurality of forwarding resources in the one forwarding resource set are in a one-to-one correspondence with a plurality of beams included in each beam set in the at least one beam set.

15. The apparatus according to claim 14, wherein the first indication information comprises an identifier of one forwarding resource set in the first forwarding resource configuration information and an identifier of at least one beam set, wherein the first forwarding resource configuration information corresponds to the at least one beam set.

16. The apparatus according to any one of claims 10 to 15, wherein time domain resources corresponding to different forwarding resource configuration information are different, and/or frequency domain resources corresponding to different forwarding resource configuration information are different.

17. The apparatus according to any one of claims 10 to 16, wherein time domain resources corresponding to different forwarding resource configuration information are the same, subbands corresponding to different forwarding resource configuration information are different, and each of the plurality of forwarding resource configuration information comprises an identifier of one subband.

18. The apparatus according to any one of claims 10 to 17, wherein the communication module is further configured to:
receive beam configuration information from a third-party network element, wherein the beam configuration information is used to configure one or more of the following:
an identifier of each beam set included in the plurality of beam sets of the relay device;
an identifier of each beam included in each beam set;
an identifier of the quasi co-location information corresponding to each beam.

19. The apparatus according to any one of claims 10 to 18, wherein the processing module is further configured to:
determine the forwarding priorities corresponding to the plurality of pieces of forwarding resource configuration information based on the forwarding resource types corresponding to the plurality of pieces of forwarding resource configuration information.

20. A communication apparatus, comprising:
a processor, wherein the processor is configured to execute a computer program or instructions in a memory, to implement the method according to any one of claims 1 to 9.

21. A communication system, comprising the communication apparatus according to any one of claims 10 and 12 to 19, and the communication apparatus according to any one of claims 11 to 19.

22. A computer-readable storage medium, wherein the computer-readable storage medium stores instructions, and when the instructions are run on a computer, the computer is enabled to perform the method according to any one of claims 1 to 9.

23. A chip, wherein the chip comprises a circuit configured to perform the method according to any one of claims 1 to 9.

24. A computer program product, comprising a computer program or instructions, wherein when the computer program or the instructions are run on a computer, the computer is enabled to perform the method according to any one of claims 1 to 9.
